(19) Europäisches Patentamt
European Patent Office
Office européen des brevets

(11) **EP 1 914 091 B1**

(12) **EUROPEAN PATENT SPECIFICATION**

(45) Date of publication and mention
of the grant of the patent:
**16.06.2010 Bulletin 2010/24**

(51) Int Cl.:
*B60C 7/12* (2006.01)          *B60C 5/14* (2006.01)
*B60C 19/00* (2006.01)          *B60C 23/00* (2006.01)

(21) Application number: **07024579.0**

(22) Date of filing: **20.03.2002**

(54) **Method of adjusting pressure of closed cell-containing particles**

Methode für Druckanpassung von geschlossene Zellen-beinhaltenden Partikeln

Méthode pour ajuster la pression des particules comprenant des cellules fermées

(84) Designated Contracting States:
**DE ES FR GB IT**

(30) Priority: **21.03.2001 JP 2001080855**
**21.03.2001 JP 2001080856**
**21.03.2001 JP 2001080905**
**09.05.2001 JP 2001138764**
**09.05.2001 JP 2001138765**
**09.05.2001 JP 2001138776**
**09.05.2001 JP 2001138882**
**06.08.2001 JP 2001237621**
**06.08.2001 JP 2001237622**
**06.08.2001 JP 2001237623**
**06.08.2001 JP 2001237627**
**06.08.2001 JP 2001237628**
**06.08.2001 JP 2001237649**
**06.08.2001 JP 2001237938**
**06.08.2001 JP 2001238115**
**06.08.2001 JP 2001238327**
**07.08.2001 JP 2001238730**
**07.08.2001 JP 2001238731**

(43) Date of publication of application:
**23.04.2008 Bulletin 2008/17**

(62) Document number(s) of the earlier application(s) in
accordance with Art. 76 EPC:
**02705417.0 / 1 375 197**

(73) Proprietor: **Bridgestone Corporation**
**Tokyo 104-8340 (JP)**

(72) Inventors:
• **Teratani, Hiroyuki**
**Kodaira-shi**
**Tokyo 187-0031 (JP)**
• **Otani, Koji**
**Kodaira-shi**
**Tokyo 187-0031 (JP)**
• **Ishikuro, Toshiyuki**
**Kodaira-shi**
**Tokyo 187-0031 (JP)**

(74) Representative: **Whalley, Kevin**
**Marks & Clerk LLP**
**90 Long Acre**
**London WC2E 9RA (GB)**

(56) References cited:
**US-A- 3 022 810          US-A- 3 866 652**
**US-A- 4 003 419          US-A- 4 037 636**

**Description**

TECHNICAL FIELD

This invention relates to a method of adjusting pressure of closed cell-containing particles to be filled into a tire-rim assembly capable of controlling a rapid drop of a tire internal pressure after being subjected to external injury and prolonging an available running distance after the injuring without sacrificing a durability and a ride comfort during the usual running of the tire not subjected to the external injury.

BACKGROUND ART

In pneumatic tires, e.g. passenger car tires, tension is generated in a skeleton portion of the tire such as a carcass, a belt and the like by sealing air in an interior of the tire under an internal pressure (absolute pressure) of about 250-350 kPa, and it is possible to conduct tire deforming and restoring against an input to the tire by such a tension. That is, a constant tension is generated in the tire skeleton by holding the tire internal pressure within a given range, whereby a load supporting function is imparted to the tire and also a rigidity is enhanced to provide basic performances required in the running of a vehicle such as driving, braking and turning performances.

Now, when the tire held under a given internal pressure is subjected to external injury, air leaks out through this external injury toward exterior to decrease the tire internal pressure to an atmospheric pressure or render into a so-called puncture state, and hence the tension generated in the skeleton portion of the tire is substantially lost. As a result, the load supporting function and the driving, braking and turning performances obtained by applying the given internal pressure to the tire are also lost, so that it is impossible to run the vehicle provided with such a tire.

Therefore, there are many proposals on a safety tire capable of running even at the puncture state. For example, as a pneumatic safety tire for automobiles, there are proposed various types such as a tire having a double-wall structure, a tire comprising a load supporting device therein, a tire having a reinforced sidewall portion and so on. As a practically used technique among these proposals, there is a tire in which a side reinforcing layer made of a relatively hard rubber is arranged in an inner face of the tire over a zone from a shoulder portion to a bead portion around a sidewall portion. This type of the tire is used as a so-called run-flat tire among tires having mainly an aspect ratio of not more than 60%.

In the technique of adding the side reinforcing layer, however, the tire weight is increased to 30-40% to raise the longitudinal spring constant of the tire, so that there are disadvantages that the rolling resistance is largely deteriorated and the ride comfort in the usual running before the puncture is degraded. Therefore, this is a technique still lacking in general purpose properties because there is a bad influence upon the performances and fuel consumption in the usual running.

On the other hand, as a pneumatic tire having a high tire section height or an aspect ratio of not less than 60% is mainly applied a run-flat tire having a structure that an inner support body such as an inner ring or the like is fixed to a rim to support a load under puncture for avoiding heat build-up in a sidewall portion based on the running at a relatively high speed over a long distance.

However, it is difficult to reduce the weight of the inner support body from a viewpoint of the shock resistance and hence the total weight of the tire, inner support body and rim increases to 30-50% or more on occasion as compared with that in the conventional pneumatic tire, so that there are disadvantages that the ride comfort in the usual running before the puncture is deteriorated but also the durability of underbody parts in the vehicle such as bush and so on is considerably lost.

In addition, there is a problem that an operation of assembling the tire onto the rim after the inner support body is arranged in the inside of the tire is complicated and takes a long time. In this connection, there is proposed a technique of easily inserting the inner support body by making a difference in a rim size between one end side of the rim in a widthwise direction and the other end side thereof, but sufficient effects are not obtained.

Moreover, in order to increase the running distance of the run-flat tire provided with the inner support body after the puncture, it is effective to add a skeleton member to make the tire structure more massive, but the low rolling resistance and ride comfort in the usual use are deteriorated by the addition of the skeleton member, so that the adoption of this technique is not actual.

In the conventional safety tires, the running ability after the puncture can be developed to a certain extent on road surfaces having a high friction coefficient to some degree such as usual asphalt road surface, rough road surface and so on. However, when the punctured tire is not a driving wheel but is an idle wheel, a significant defect is exposed on a road surface having a low friction coefficient represented by ice road or snow road in winter season. That is, the tire is naturally small in the deflection at a state before the puncture and holds a shape near to a circle, so that when the vehicle is moved by a driving force produced from the driving wheel at a start time, the idle wheel begins to rotate accompanied with the movement of the vehicle. On the contrary, the tire is large in the deflection and takes a shape deviated from the circle at a state after the puncture. Since the idle wheel is a wheel not self-rotating or not developing the driving force, the rotation of the idle wheel is dependent upon the friction coefficient between the movement of the vehicle and the road surface. When the vehicle begins to start on the road surface having a low friction coefficient, therefore, the tire largely deflected and deviated from the circle through the puncture generates a large slippage in a ground contacting face owing to the low friction coefficient of the road surface and moves together with the vehicle while being dragged without the rotation. Because, the ground contact pressure distribution at the ground contacting face becomes extremely non-uniform together with a large deflected deformation as compared with a relatively uniform state before the puncture. Such a situation occurs at not only the starting but also the braking. As a result, there is a possibility that systems previously equipped on the vehicle, i.e. "driving force adjusting system (traction control)" for making up the safety running on the road surface having the low friction coefficient, "braking force adjusting system (anti-lock brake system)" for avoiding tire lock in the braking and so on are not sufficiently developed.

As mentioned above, the conventional techniques mention the running ability after the drop of the internal pressure through the injuring of the tire, but can not cope with the state of rapidly dropping the internal pressure by falling out the foreign matter stuck in the tire during the running, so that they can not be said to be sufficient in the countermeasure for avoiding a risk for the puncture.

On the other hand, there are proposed various techniques of previously arranging a sealant material having a fluidity in an inner face of the tire to instantaneously seal a hole after the injuring by utilizing the pressure inside the tire, but they have a disadvantage of bringing the increase of the tire weight. That is, the sealing ability of the injured hole with the sealant material is dependent upon the thickness of the sealant material layer formed on the inner face of the tire. For example, the sealant material layer is required to have a thickness of about 3-5 mm for sealing the injured hole formed by a nail having a diameter of about 3 mm. In case of the general tire for passenger car, therefore, the weight of 1500-2500 g is increased by arranging the sealant material, which not only deteriorates the low rolling resistance and ride comfort in the usual running before the puncture bit also considerably losses the durability of the bush or the like as an underbody part of the vehicle. Also, the tire provided with the sealant material is poor in the weight uniformity, which is a main factor of deteriorating the low rolling resistance and ride comfort in the usual running.

Furthermore, when a foreign matter such as a nail or the like sticks into the tire in use, such a foreign matter does not always immediately fall out from the tire, and may stay in the tire at a stuck state. At such a state, the internal pressure of the tire does not rapidly drop and an input is applied to the tire at a stuck and wrinkled state of the foreign matter such as nail or the like in the later running, so that fretting is caused at a contact face between the foreign matter such as nail or the like and the tire. As the contact face is worn to a certain extent by such a fretting, a gap is formed in the contact face, and the foreign matter such as nail or the like is suddenly fallen out form the tire at one time to drop the internal pressure at once and hence the running is impossible. The conventional tire provided with the sealant material can not sufficiently cope with the sudden falling out of the foreign matter and the drop of the internal pressure resulted from the input history of the remaining foreign matter as mentioned above and is not satisfactory.

Moreover, tires in which a foamed body having many closed cells is filled in an inner space of a tire and rim assembly are disclosed, for example, in JP-A-6-127207, JP-A-6-183226, JP-A-7-186610, JP-A-8-332805 and the like. These proposed tires are mainly restricted to special or small-size tires such as an agricultural tire, a rally tire, a motorcycle tire, a bicycle tire and so on. Therefore, it is unknown to apply them to tires particularly attaching weight to the low rolling resistance and ride comfort such as passenger car tires, truck and bus tires and so on. Also, all of the foamed bodies are low in the expansion ratio, so that the weight is big for the foamed body having closed cells and hence the deterioration of the ride comfort against vibrations and the fuel consumption is not avoided. Furthermore, since the interior of the closed cell is an atmospheric pressure, the foamed body is functionally insufficient as an alternate for high-pressure air in the conventional tire.

Further, Japanese Patent No. 2987076 discloses a punctureless tire in which a filler made of the foamed body is inserted into an inner peripheral portion of the tire. In addition to the disadvantages based on the fact that the pressure inside the cell is very close to an atmospheric pressure, however, since the foamed body is made of urethane, energy loss resulted from an intermolecular hydrogen bond of an urethane group is large and self-heat build-up is high. Therefore, when the urethane foamed body is filled in the tire, the foamed body is heat-developed by repetitive deformation during the rotation of the tire to largely deteriorate the durability. And also, the raw material hardly forming closed cells is used, so that the resulting cells are easily communicated with each other and it is difficult to hold the gas therein and there is a disadvantage that a desired tire internal pressure (load support ability or deflection suppressing ability) is not obtained.

Furthermore, JP-A-48-47002 proposes another punctureless tire in which a plurality of expansion pressure cellular bodies formed by integrally covering and sealing outer circumferences of many cellular bodies consisting essentially of closed cells with an outer coating made of rubber or synthetic resin having a thickness of 0.5-3 mm are filled in the tire to maintain the tire at a specified internal pressure. According to this technique, in order to make the pressure inside the cells of the cellular body higher than the atmospheric pressure, an amount of a foaming agent compounded in the starting material for the formation of the closed cells rendering into the expansion pressure cellular body is set to an amount of a foaming agent generating an amount of gas at least equal to or more than an inner volume of the tire, whereby it is aimed to provide performances at least similar to those of the usual pneumatic tire.

In the above technique, in order to prevent the dissipating of the gas from the cells of the expansion pressure cellular body, the cellular bodies are integrally covered and sealed with the outer coating. As a material for the outer coating are exemplified only a tube for an automobile and compounding ingredients for the formation of such a tube. That is, the cellular bodies are covered and sealed with a soft elastic outer coating mainly composed of butyl rubber used in a tire tube or the like and having a low permeability to nitrogen gas and filled in the tire. As a production method of the tire, an uncured tire tube is used as the soft elastic outer coating and uncured starting materials for the formation of closed cellular body are used as the expansion pressure cellular body, and they are placed in the interior of the tire-rim assembly and foamed by heating to obtain a tire filled with the foamed body. Air of atmospheric pressure in the interior of the tire is spontaneously discharged through a small exhaust hole formed in the rim by the expansion of the cellular bodies.

In general, the internal pressure of the passenger car tire is set to about 250-350 kPa as an absolute pressure at room temperature, so that it is presumed from an equation of gas state that the pressure inside the resulting cellular body filled tire is about 1.5 times the above internal pressure at a heating state (about 140°C) for the vulcanization building of the tire. However, the uncured tire tube itself as the soft elastic outer coating causes blowing due to the lacking of vulcanization pressure (since the vulcanization pressure is a pressure in the expansion of the cellular body as a source, the lacking of the pressure in the cellular body induces the blowing of the soft elastic outer coating). In order to avoid such a blowing phenomenon, it is required to largely increase the amount of the foaming agent compounded, or to raise the heating temperature. In the means for increasing the amount of the foaming agent compounded, however, the internal pressure at room temperature exceeds over 400 kPa accompanied with the increase of the foaming agent amount, so that it is difficult to alternate the conventional pneumatic tire with the cellular body filled tire. In the means for raising the heating temperature, the damage of the tire by heat aging becomes large and the durability of the tire is considerably deteriorated, which causes a problem in the durability at a long use time. Although a great number of expansion pressure cellular bodies covered with the soft elastic outer coatings are arranged in the interior of the tire-rim assembly, considering friction between the blown soft elastic outer coatings, friction between the inner face of the tire and the inner face of the rim and the like, the problem becomes significant in view of the durability. The above problems are said to be a serious defect resulted from the arrangement of many divided expansion pressure cellular bodies different from a case that the shape of the expansion pressure cellular bodies takes an integrally doughnut-shaped form. And also, the small exhaust hole formed in the rim is effective to spontaneously discharge air of the atmospheric pressure from the interior of the tire by the expansion of the expansion pressure cellular bodies, but also serves as a dissipating path for the gas inside the cells in the expansion pressure cellular bodies, so that such a tire is not durable in use over a long time.

US 4,003,419 discloses a known tire filled with cellular particles.

Although the composition mainly composed of butyl rubber having a low permeability to nitrogen gas such as tire tube or the like is used as the soft elastic outer coating, since the vulcanization reaction rate of the butyl rubber is very slow, it is required to take a considerably prolonged heating time in order to complete the reaction at a temperature of about 140°C. This means that the crosslinking density of the soft elastic outer coating is lacking, which can be said to be a cause bringing the peeling of the soft elastic outer coatings. Also, the prolongation of the heating time further increases the damage of the tire through the aforementioned heat aging, so that the deterioration of the durability can not be avoided and hence the above technique can not be said to be a good plan.

DISCLOSURE OF THE INVENTION

According to the invention, there is provided a method of adjusting pressure of closed cell-containing particles, as claimed in claim 1.

The gist and construction of the invention are as follows.

BRIEF DESCRIPTION OF THE DRAWINGS

FIG. 1 is a diagrammatically section view of an embodiment of a tire-rim assembly in a widthwise direction of the tire.
FIG. 2 is a diagrammatically section view of another embodiment of the tire-rim assembly in a widthwise direction of the tire.
FIG. 3 is a diagrammatically section view of the other embodiment of the tire-rim assembly in a widthwise direction of the tire.
FIG. 4 is a diagrammatically section view of a further embodiment of the tire-rim assembly in a widthwise direction of the tire.
FIG. 5 is a schematic view illustrating a process of applying an internal pressure according to the invention.

FIG. 6 is a schematic view illustrating an inlet port of cell-containing particles and an outlet port of extra gas.
FIG. 7 is a schematic view illustrating an inlet port of cell-containing particles and an outlet port of extra gas.
FIG. 8 is a schematic view illustrating a pipe line for introducing cell-containing particles.
FIG. 9 is a perspective view illustrating a concrete example of vibration applying means.
FIG. 10 is a schematic view illustrating a concrete example of means for weighing cell-containing particles.
FIG. 11 is a schematic view illustrating a pressure changing function in a storage tank and a pressure sensor.
FIG. 12 is a graph showing results evaluated on static spring constant in an assembly of a tire filled with cell-containing particles and a rim.

## BEST MODE FOR CARRYING OUT THE INVENTION

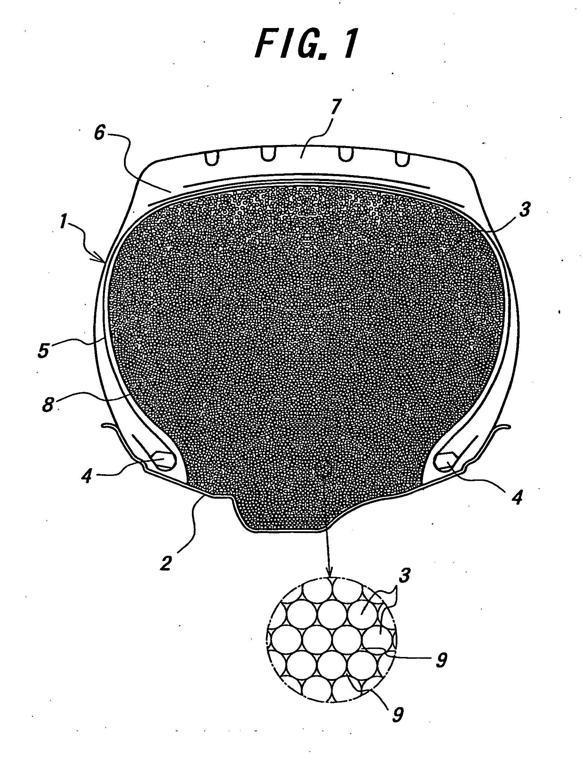

The tire-rim assembly is described with reference to FIG. 1 showing a section in its widthwise direction below.

That is, the illustrated tire-rim assembly is constructed by assembling a tire 1 onto an approved rim 2 and disposing a great number of substantially sphere-shaped particles each comprised of a continuous phase of a resin and a closed cell(s) in an interior of the tire 1 defined by the tire 1 and the approved rim 2. As the tire 1, it is not particularly required to limit the structure unless various tires, e.g. tire for passenger car and the like are according to usual manner. As the tire, mention may be made of tires for passenger car, tires for truck, tires for bus, tires for motorcycle, tires for bicycle, tires for construction vehicle, tires for airplane and so on. For instance, the illustrated tire is a general tire for passenger car, in which a belt 6 and a tread 7 are successively arranged on a crown portion of a carcass 5 toroidally extending between a pair of bead cores 4 outward in a radial direction thereof. Moreover, numeral 8 is an innerliner layer.

The particle 3 is a hollow body having a substantially sphere-shaped closed cell(s) surrounded by a continuous phase of a resin and a diameter of, for example, about 10-500 $\mu$m, or a sponge structural body containing a great number of small chambers made of closed cells. That is, the particle 3 is a particle involving a closed cell(s) not communicated with an exterior in which the number of the closed cells may be one or more. The feature that the particle involves the closed cell(s) means that the particle has a shell of a resin involving the closed cell at a closed state. Therefore, the continuous phase of the resin means a continuous phase of a composition constituting the shell of the resin. Moreover, the composition of the shell made of the resin is as mentioned later.

By disposing a great number of the particles 3 in an interior of the tire is born a given internal pressure of the tire together with a separately filled air and at the same time a minimum internal pressure of the tire required in a low internal pressure is ensured.

Namely, in the tire-rim assembly containing the great number of the particles 3 disposed in the interior of the tire 1, when the tire is subjected to injury, a gas existing in spaces 9 between the particles 3, which gives a predetermined internal pressure to the tire together with the particles 3, leaks out from the tire and hence the internal pressure of the tire drops to a pressure approximately equal to that at the outside of the tire. However, the following phenomenon is caused inside the tire in the course of dropping the internal pressure, whereby an internal pressure required in the tire is ensured.

At first, when the tire is injured to start the dropping of the internal pressure, the particles seal the injured portion to control the rapid drop of the internal pressure. On the other hand, a deflection amount of the tire is increased accompanied with the dropping of the tire internal pressure to decrease an inner volume of the tire, and as a result the particles themselves directly bear the load to thereby hold a minimum internal pressure of the tire required in later running. And also, the particles existing under the tire internal pressure before the injuring becomes existent inside the tire even after the injuring as the pressure inside the closed cell in the particle holds a pressure proportionate to the above tire internal pressure after the injuring, or as the total volume of the particles before the injuring is held. When the tire is further run, therefore, friction is caused between the particles to self-generate heat while the particles themselves directly bear the load, and hence the temperature of the particles inside the tire rapidly rises. As such a temperature exceeds an expansion starting temperature of the resin forming the continuous phase for the particle, the pressure inside the closed cell in the particle is increased by the rapid rise of the particle temperature over a pressure proportionate to the tire internal pressure before the injuring, so that the volume of the particle expands at one stretch and the pressure inside the tire is restored to a level near to the pressure before the injuring.

This state is a state that the particles directly bear the load to provide a minimum internal pressure of the tire required in the running. The deflection of the tire at such a state is relatively small and a circular shape can be held as compared with the aforementioned conventional safety tire and hence the distribution of ground contact pressure in the ground contacting area of the tire can be maintained at a relatively uniform state. Therefore, when the particles according to the invention are filled in, for example, a tire mainly running on a road surface in a winter season such as a studless tire or the like, basic performances inherent to the studless tire are never deteriorated even after the injuring of the tire. That is, the deterioration of the steering performances such as traction, braking, turning and so on is less even in a road surface having a low friction coefficient such as snow road, ice road or the like and it is never caused to make the running impossible.

In order to advantageously conduct the running under a low internal pressure after the injuring of the tire, it is necessary that the particles having a mean bulk specific gravity under an atmospheric pressure of not more than 0.1 are filled in the interior of the tire. Because, when the particles having a mean bulk specific gravity under an atmospheric pressure of more than 0.1 are filled in the interior of the tire, the total weight of the particles becomes heavy to damage the ride comfort in the running under a normal internal pressure and the durability of the underbody parts of the vehicle but also the self-heat generation in the running at the drop of the tire internal pressure accompanied with the injuring of the tire becomes large to fuse the particles before a target running distance is attained and hence it is difficult to hold the minimum internal pressure of the tire required in the running.

Here, the mean bulk specific gravity under an atmospheric pressure can be calculated, for example, by measuring a weight of particles having a known volume under an atmospheric pressure. In the invention, the mean bulk specific gravity under an atmospheric pressure is calculated by weighing particles in a measuring cylinder under an atmospheric pressure and applying vibrations to the cylinder in a ultrasonic water bath to render into a stably packed state of the particles and measuring particle volume and particle weight. That is, the mean bulk specific gravity of particles under an atmospheric pressure = total weight of particles/total volume of particles. Moreover, the total volume of particles means a sum of total volume of shells of the particles, total volume of closed cells in the particles and total volume of spaces between the particles.

Further, it is important that after the particles having the above mean bulk specific gravity are disposed in the interior of the tire, a pressure at 25°C in the interior of the tire is set to not less than 150 kPa, preferably not less than 150 kPa but not more than 900 kPa as an absolute pressure. That is, when the pressure is less than 150 kPa, compression level of the particles is small and also a space pressure around the particles is small, so that a load bearing ratio of the particles becomes high in the usual running before the injuring of the tire and there is a fear of damaging the durability of the particles. While, when it exceeds 900 kPa, a part of the particles is at a completely crushed state by compression and is broken at this time. As a result, there is a possibility that when the tire internal pressure is dropped by the injuring of the tire, it can not be guaranteed to maintain the minimum internal pressure of the tire required for running over a constant distance.

Although the pressure at 25°C in the interior of the tire is limited from the above reasons, such a pressure is preferable to be not less than 180 kPa, particularly not less than 200 kPa, more particularly not less than 250 kPa. The feature that the pressure is rendered into not less than 180 kPa, not less than 200 kPa, further not less than 250 kPa means that the compression level of the particles is made high and the pressure of the space around the particles is raised, and is possible to mitigate the load bearing ratio of the particles to preserve the durability of the particle.

In the invention, it is particularly desirable to hold a minimum internal pressure of the tire at least required in the running in order not only to seal the injured portion but also to enable stable running even in the rapid dropping of the tire internal pressure after the injuring. For this end, when the great number of the particles 3 are filled in the interior of the tire, the particles having a mean bulk specific gravity under an atmospheric pressure of not more than 0.1 are disposed in the interior of the tire so that a volume filling ratio defined by the following equation (A) is not less than 75% but not more than 150%, whereby the internal pressure of the tire is partly born and also a minimum internal pressure required in the running under a low internal pressure of the tire is ensured more effectively:

$$\text{(Volume filling ratio)} = (Vs/Vt) \times 100 \cdot \cdot \cdot \cdot \cdot (A)$$

(wherein Vs: total volume under an atmospheric pressure of all particles disposed in the interior of the tire (liter)

Vt: inner volume of the tire (liter)).

Here, the total volume under an atmospheric pressure of all particles disposed in the interior of the tire is calculated by the following method. At first, the mean bulk specific gravity of the particles under an atmospheric pressure is determined by the aforementioned method. Then, the total weight of the particles filled in the tire is measured and divided by the calculated mean bulk specific gravity of the particles under an atmospheric pressure, whereby the total volume of all particles disposed in the interior of the tire under an atmospheric pressure can be calculated. That is, total volume of all particles disposed in interior of tire under atmospheric pressure = total weight of particles filled in tire/mean bulk specific gravity of particles under atmospheric pressure.

Moreover, the volume of the particles 3 according to the invention is a volume including volumes of spaces between the particles under an atmospheric pressure and can be represented as follows.

$$\text{Volume of particles used} = \text{volumes of shells in particles} + \text{volumes of gaps inside}$$

$$\text{particles} + \text{volumes of spaces between particles}$$

In this case, volume of gas inside particle = volume of closed cell(s).

In the invention, therefore, particles are weighed in a measuring cylinder under an atmospheric pressure and rendered into a stably packed state by applying vibrations to the cylinder in a supersonic water bath to measure the volume of the particles.

Also, the inner volume of the tire is defined as a volume defined by the tire and the rim. For this end, after the tire is assembled onto the rim, a non-compressive fluid having a known specific gravity such as water or the like is filled in the interior of the assembly, whereby the inner volume of the tire is determined from an increment of the weight.

In the tire-rim assembly containing the great number of the particles 3 disposed inside the tire at the above volume filling ratio, if the tire is injured, a gas existing in spaces 9 between the particles 3, which gives a normal internal pressure to the tire together with the particles 3, leaks out from the interior of the tire, and hence the internal pressure of the tire drops to an extent substantially equal to a pressure outside the tire. In the course of dropping the internal pressure, however, a phenomenon as mentioned later is caused inside the tire to maintain a necessary internal pressure of the tire.

The reason why the volume filling ratio is limited to not less than 75% but not more than 150% is as follows. When the volume filling ratio is less than 75%, the sealing of the injured portion with the particles is broken and a pressure in the spaces around the particles is made equal to an atmospheric pressure, so that the tire is largely deflected and run while dragging a sidewall portion thereof, whereby the sidewall portion is locally worn to cause a fear breaking the tire before the arrival to the target running distance. While, when it exceeds 150%, a part of the particles is at a completely crushed state through compression and is broken at this time and hence there is a possibility that when the tire internal pressure is dropped by injuring the tire, it can not be guaranteed to maintain a minimum internal pressure of the tire required in the running over a constant distance.

Although the volume filling ratio of the particles inside the tire is limited from the above reasons, the volume filling ratio is further preferable to be not less than 75% but not more than 130%, not less than 75% but not more than 110%, and not less than 80% but not more than 100%.

And also, spring constant in a radial direction of the tire can be variously changed by variously changing the volume filling ratio of the particles filled inside the tire within the above range. That is, as the volume filling ratio is increased, if the pressure in the spaces around the particles is dropped to an extent approximately equal to the atmospheric pressure after the injuring of the tire, each of the compressed particles creates recovery counterforce, so that a higher spring constant can be ensured.

After the particles are supplied to the interior of the tire, the particles can be compressed, for example, by filling air of about 200-300 kPa into the interior of the tire. Therefore, the compression level of the particles can be set to a desired range by properly adjusting the amount of the particles supplied to the interior of the tire and air pressure filled in the interior of the tire.

When the particles are compressed by the above method, high-pressure air is existent around the particles and hence a load born by the particles in the usual running can be mitigated, so that fatigue applied to the particles accompanied with repetitive deformation during the rotation of the tire is reduced and there is not damaged the durability of the particle.

Furthermore, when the assembly of the tire filled with the great number of the particles 3 and the rim is mounted onto a vehicle, a volume filling amount of the particles is within a range from the following lower limit to the following upper limit as a total volume including a space volume around the particle under an atmospheric pressure.

Upper limit of volume filling amount: an inner volume of the tire-rim assembly under a load applied to each shaft of the vehicle when the assembly inflated under a pressure adjusted to an internal pressure designated by such a vehicle is mounted onto the vehicle;

Lower limit of volume filling amount: an inner volume of the tire-rim assembly under a load corresponding to 2.0 times the load applied to each shaft of the vehicle when the assembly having an internal pressure set to an atmospheric pressure is mounted onto the vehicle.

However, the volume filling amount of the particles indicates a total volume of all particles filled in the interior of the tire-rim assembly under an atmospheric pressure, which includes space volumes around the particles.

Here, the volume filling amount of the particles indicates a total volume of all particles filled in the interior of the tire as measured by the above method under an atmospheric pressure, which includes space volumes around the particles.

The reason of defining "the upper limit of the volume filling amount is an inner volume of the tire-rim assembly under a load applied to each shaft of the vehicle when the assembly inflated under a pressure adjusted to an internal pressure designated by such a vehicle is mounted onto the vehicle" is described below. In the invention, the tire internal pressure is recovered by the aforementioned pressure developing mechanism of the particles. Therefore, when the particles are filled at a volume exceeding the upper limit, there are a possibility that friction between the particles is caused in the running under a designated internal pressure before the injuring of the tire and a possibility that the rolling resistance is increased by such a friction. This is unfavorable in view of fuel saving.

Similarly, the reason of defining "the lower limit of the volume filling amount is an inner volume of the tire-rim assembly under a load corresponding to 2.0 times the load applied to each shaft of the vehicle when the assembly having an internal pressure set to an atmospheric pressure is mounted onto the vehicle" is described below. In the invention, the tire internal pressure is recovered by the aforementioned pressure developing mechanism of the particles. Therefore, when the particles are filled at a volume not meeting the lower limit, even if the tire internal pressure drops to the atmospheric pressure, the particles themselves can not directly bear the load and the friction between the particles is hardly caused and as a result, the recovery of the tire internal pressure can not be guaranteed.

As mentioned above, according to the invention, the internal pressure recovering function can be surely developed by filling the particles at a volume within a range between the above upper limit and lower limit, whereby it is attained to safely run over a constant distance after the injuring of the tire. The upper limit may be properly corresponded to a load applied to each shaft of the vehicle in accordance with the running condition of the vehicle and the use method and conditions of the vehicle such as number of crew members, freight authorized mass and so on. Under a use situation that the number of crew members or the freight authorized mass changes day by day, it is preferable to lower the upper limit in the volume of the particle considering the above fear. That is, it is preferable to be an inner volume of the tire-rim assembly under a load corresponding to 1.2 times, preferably 1.5 times, more preferably 2.0 times the load applied to each shaft of the vehicle.

Also, the lower limit can be explained as a preferable range from the following reasons. That is, when the internal pressure starts to be dropped by the injuring of the tire, the friction between the particles is rapidly caused at a volume filling amount near to the upper limit to recover the internal pressure. Under such a situation, a difference of wheel speed between left and right wheels is not large and an amount of dropping the pressure as directly measured by a tire internal pressure sensor is not large, so that a sensitivity for detecting the drop of the internal pressure through the injuring of the tire lowers and there is a fear that a risk information can not be opportunely reported to a driver. On the other hand, when the internal pressure is dropped by the injuring of the tire at a volume filling amount of the particles near to the lower limit, the deflection amount becomes large due to the large dropping of the internal pressure to a some extent and also the inner volume of the tire largely decreases, and thereafter the friction between the particles is caused to recover the internal pressure. Under this situation, once the tire internal pressure largely lowers, tension applied to the tire skeleton members such as a carcass and the like largely lowers. Therefore, there is caused a fear that a bead portion of the tire fitted onto the rim comes off from the rim at a state of a low internal pressure (= low tension) held for a slight time until the internal pressure is recovered. For this end, it is preferable that the lower limit becomes high in order to avoid such a fear. Concretely, the lower limit is an inner volume under a load corresponding to 2.0 times the load applied to each shaft of the vehicle when the tire internal pressure is set to an atmospheric pressure, preferably an inner volume when the tire internal pressure is set to 10% of an internal pressure designated by the vehicle, further preferably 30% thereof, more preferably 40% thereof, and most preferably 50% thereof.

Moreover, a gas of, for example, about 150-250 kPa is filled in the interior of the tire after the particles are disposed in the interior of the tire to hold the internal pressure in the space around the particles for a constant time, whereby a pressure inside the closed cell in the particles can be enhanced to about 150-250 kPa. Therefore, the pressure inside the closed cell in the particle can be set to a desired range by properly adjusting the pressure of the gas filled in the interior of the tire. Thus, when the pressure inside the closed cell in the particles is set to a pressure higher than the atmospheric pressure, the aforementioned internal pressure recovering function after the injuring of the tire can be surely developed. And also, since a high pressure is existent around the particles, a load born by the particles during the usual running can be mitigated to a negligible extent, so that fatigue applied to the particles accompanied with the repetitive deformation during the rotation of the tire is come out and hence there is not damaged the durability of the particle.

Furthermore, in order to surely develop the above internal pressure recovering function, it is important to surely seal the injured portion before the development of the internal pressure recovering function. That is, if the sealing of the injured portion is insufficient, the recovered internal pressure leaks out from the injured portion, and hence the internal pressure obtained by the recovering of the internal pressure temporarily contributes to the later running ability and there is a fear that the running performance after the injuring can not be necessarily guaranteed. Since the particle according to the invention is a particle of a hollow structure being low in the specific gravity and rich in the elasticity, as the gas in the spaces around the particles starts to leak out from the injured portion after the injuring of the tire, the particles immediately crowd in the injured portion together with a stream based on the leaking of the gas in the spaces to instantaneously seal a wound of the injured portion. As mentioned above, the sealing function of the injured portion with the particles is a necessary function supporting the internal pressure recovering function according to the invention.

Although the particles according to the invention are extremely low in the specific gravity, they have a distribution in the specific gravity because all of the particles are not uniform. As a measure for roughly separating the above particles into two components in view of the specific gravity, there is attempted the separation into a component (particles having a specific gravity of not less than 0.79) precipitating in ethanol (specific gravity: 0.79) and a floating component (particles having less than 0.79) and each of the particles is positioned under a definition as a precipitation component content to a total weight of a sample. Here, features found from the definition as the precipitation component content are as follows.

Among the particles disposed in the interior of the tire, it is preferable that the content of particles having a specific gravity of not less than 0.79 is not more than 40 mass%. First, the definition on the content of particles having a specific gravity of not less than 0.79 is based on a discovery that the particles having a specific gravity of not less than 0.79 control the durability of the particles. Therefore, when the content of the particles having a specific gravity of not less than 0.79 exceeds 40 mass%, as the pressure in the spaces around the particles is rendered into an atmospheric pressure by the injuring of the tire, the breakage of the particles becomes extremely fast and the tire is largely deflected and is at a running state while dragging the sidewall portion, and hence the sidewall portion is locally worn and there is a possibility that the tire is broken before the arrival to the target running distance.

Although a preferable content of the particles having a specific gravity of not less than 0.79 is limited from the above reason, such a content is preferable to be not more than 30 mass%, not more than 20 mass%, and further not more than 5 mass%.

Since the above effect is obtained by disposing particles having given mean bulk specific gravity and volume in the interior of the tire, it is not required to regulate the tire structure itself, and a new tire-rim assembly can be provided by utilizing a general-purpose tire and a general-purpose rim.

In the invention, it is preferable that in order to provide a minimum internal pressure required at the low internal pressure after the injuring of the tire, a gas sealed in the closed cell(s) of the particle under a given pressure does not leak out toward the outside of the particle, or the continuous phase forming the closed cell in the particle has a property hardly permeating the gas. Therefore, the continuous phase of the particle as a matrix for the closed cell is made of a material having a low gas permeability. Concretely, it is preferably made of at least one material selected from a polyvinyl alcohol resin, an acrylonitrile based copolymer, an acrylic copolymer, a vinylidene chloride based copolymer, an acrylonitrile/styrene resin (AS), a polyethylene resin (PE), a polypropylene resin (PP), a polyester resin (PET) and a polystyrene/polyethylene copolymer (PS/PE). All of these materials can be relatively easily expanded in the tire and have a flexibility to an input based on the tire deformation, which are particularly effective for the invention.

Especially, it is preferable to apply any one of the polyvinyl alcohol resin, the acrylonitrile based polymer, the acrylic polymer and the vinylidene chloride based polymer to the continuous phase of the particle. As the acrylonitrile based polymer is advantageously adapted at least one selected from acrylonitrile polymer, acrylonitrile/methacrylonitrile copolymer, acrylonitrile/methyl methacrylate copolymer and acrylonitrile/methacrylonitrile/methyl methacrylate terpolymer, and as the acrylic polymer is advantageously adapted at least one selected from methyl methacrylate resin (MMA), methyl methacrylate/acrylonitrile copolymer (MMA/AN), methyl methacrylate/methacrylonitrile copolymer (MMA/MAN) and methyl methacrylate/acrylonitrile/methacrylonitrile terpolymer (MMA/AN/MAN), and as the vinylidene chloride based polymer is advantageously adapted at least one selected from vinylidene chloride/acrylonitrile copolymer, vinylidene chloride/methyl methacrylate copolymer, vinylidene chloride/ methacrylonitrile copolymer, vinylidene chloride/acrylonitrile/methacrylonitrile copolymer, vinylidene chloride/acrylonitrile/methyl methacrylate copolymer, vinylidene chloride/ methacrylonitrile/methyl methacrylate copolymer and vinylidene chloride/acrylonitrile/methacrylonitrile/methyl methacrylate copolymer. All of these materials are small in the gas permeation constant and low in the gas permeability, so that they do not leak the gas in the closed cell toward the exterior and can hold the pressure inside the closed cell.

Furthermore, the continuous phase of the particle is recommended to have a gas permeation constant at 30°C of not more than $300 \times 10^{-12}$ (cc·cm/cm$^2$·s·cmHg), preferably a gas permeation constant at 30°C of not more than $20 \times 10^{-12}$ (cc·cm/cm$^2$·s·cmHg), further preferably a gas permeation constant at 30°C of not more than $2 \times 10^{-12}$ (cc·cm/cm$^2$·s·cmHg). In view of a result that an innerliner layer in a common pneumatic tire has a sufficient internal pressure holding function at a level that a gas permeation constant is not more than $300 \times 10^{-12}$ (cc·cm/cm$^2$·s·cmHg), the gas permeation constant at 30°C of the continuous phase of the particle is rendered into $300 \times 10^{-12}$ (cc·cm/cm$^2$·s·cmHg). However, such a level of the gas permeation constant is required to make up an internal pressure once every about 3-6 months, so that the gas permeation constant is recommended to be not more than $20 \times 10^{-12}$ (cc·cm/cm$^2$s·cmHg), further preferably not more than $2 \times 10^{-12}$ (cc·cm/cm$^2$·s· cmHg) from a viewpoint of the maintenance.

As the gas constituting the closed cell of the particle is mentioned at least one gas selected from nitrogen, air, straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (1):

$$R^1\text{-}O\text{-}R^2 \qquad \text{(I)}$$

(wherein each of $R^1$ and $R^2$ is a monovalent hydrocarbon residue having a carbon number of 1 to 5 and may be a saturated hydrocarbon or an unsaturated hydrocarbon and may have a straight or branched structure and contain a ring). And also, the gas filled in the tire is usually air or an air changing an oxygen partial pressure, but if the gas in the particle is not a fluoride, a gas containing no oxygen such as nitrogen, inert gas or the like is preferable in view of the safeness.

Moreover, a method of forming the particles having a closed cell(s) is not particularly limited, but it is preferable to use a foaming agent. As the foaming agent, mention may be made of a pyrolitic foaming agent producing a gas by pyrolysis, a high-pressure compression gas, a liquefied gas and the like.

Particularly, a large number of the pyrolitic foaming agents have a characteristic of producing nitrogen, so that the particle obtained by properly controlling the reaction of such a pyrolitic foaming agent contains nitrogen in its cell.

In case of forming the continuous phase of the resin constituting the particle, an emulsion polymerization is carried out while liquefying propane, butane, pentane, hexane, heptane, octane, cyclopropane, cyclobutane, cyclopentane, cyclohexane, cycloheptane, cyclooctane or the like under a high pressure and dispersing into a reaction solvent, whereby there can be obtained expandable resin particles in which a gas component such as propane, butane, pentane, hexane, heptane, octane, cyclopropane, cyclobutane, cyclopentane, cyclohexane, cycloheptane, cyclooctane or the like is sealed in the resin continuous phase at a liquid state. When such particles are filled in the tire and heated to form particles, propane, butane, pentane, hexane, heptane, octane, cyclopropane, cyclobutane, cyclopentane, cyclohexane, cycloheptane or cyclooctane is sealed in the cell. As isomers of butane, pentane, hexane, heptane and octane, mention may be made of isobutane, isopentane, neopentane, 2-methyl pentane, 2,2-dimethyl butane, methylhexanes, dimethylpentanes, trimethyl butane, methylheptanes, dimethylhexanes, trimethylpentanes and so on.

Also, an objective tire can be obtained by subjecting the above expandable resin particles to a surface coating such as a surfactant, an oiling agent or the like and expanding under heating in the tire. Furthermore, an objective tire can be obtained by previously expanding under heating the resin particles sealed with the liquefied gas to form particles of substantially a sphere form and compression-filling them into the tire.

On the other hand, the tire is common to have an innerliner layer in its inner peripheral face. Such an innerliner layer is preferable to be made of a thermoplastic elastomer composition comprising a nylon resin having a melting point of 170-230°C and a halide of isobutylene paramethylstyrene copolymer in which an elastomer component is dynamically cured at a gelation ratio of 50-95%. Because, the nylon resin constitutes the continuous phase different from the conventional innerliner layer mainly composed of butyl rubber and the gas permeation is very low and hence the function of the innerliner layer can be strengthened. Furthermore, an innerliner layer having a rich flexibility and excellent heat resistance and durability is obtained by using the thermoplastic elastomer composition in which the elastomer component including the halide of isobutylene paramethylstyrene copolymer is dynamically cured at the gelation ratio of 50-95%. Since the innerliner layer has the above characteristics, there can be created an environment facilitating to retain the gas in the closed cell(s) of the particle.

Moreover, the gelation ratio is a value calculated by the following equation after pelletized compounds after biaxial milling are subjected to Soxhlet extraction with acetone in a water bath for 8 hours and further a residue is subjected to Soxhlet extraction with n-hexane for 8 hours to extract uncured elastomer components in a solvent and then weights of extracts with acetone and n-hexane after the removal of the solvent are measured.

$$\text{Gelation ratio (\%)} = [\text{weight of all compounds} - \{(\text{extraction with acetone} + \text{extraction with n-hexane}) - \text{amount of stearic acid}\}]/\text{weight of all compounds} \times 100$$

In addition, the innerliner layer is preferable to have a gas permeation constant at 30°C of not more than $20 \times 10^{-12}$ (cc·cm/cm$^2$·s·cmHg). Because, even if the gas inside the cell is leaked out from the particle for some reason, when the gas permeability of the innerliner layer is sufficiently low, the leaking of the gas from the cell(s) of the particle toward outside of the tire becomes less and it is advantageous to maintain the internal pressure of the tire. That is, the gas permeability of the innerliner layer is a factor directly deciding the pressure maintenance of the tire as a pressure vessel. Of course, the gas permeability of the continuous phase constituting the particle is basic to be low, and further it is ideal to use an innerliner layer having a low gas permeability.

A sealant matrix material can be further filled in the interior of the tire-rim assembly filling the great number of the particles 3 therein. In this case, when an injury such as laceration or the like is caused in the tire to blow off the gas inside the tire through such an injured portion toward the outside, the particles and the sealant matrix material vigorously flow into the injured portion. As a result, a large space of the injured portion is first clogged with the particles moved into the injured portion, and further micro-spaces between the injured portion and the particles are filled with the sealant matrix material and the flowing-movement of the particles in the injured portion are controlled by the tackiness of the sealant matrix material to seal the injured portion with the particles and the sealant matrix material. Therefore, the gas in the tire is not leaked out to the exterior. Thus, the particles and the sealant matrix material bear part of the function sealing the injured portion and the time up to the completion of the sealing is considerably shortened, so that the breakage of the tire and the rapid dropping of the internal pressure can be effectively controlled to maintain the safeness of the tire over a constant time after the injuring.

The sealant matrix material is not particularly limited unless it has a fluidity, a tackiness and the like and may be properly selected in accordance with the use purpose. For instance, it may preferably include ethylene-propylene copolymer, ethylene-propylene-diene terpolymer, polybutadiene, a halogenated polybutadiene, polyisoprene, polyisoprene-butadiene copolymer, butyl rubber, a halogenated butyl rubber, polyethylene, polypropylene, acrylonitrile-butadiene copolymer, styrene-butadiene copolymer, a synthesized polyterpene, a thermoplastic olefin, pentaerythritol ester of hydrogenated rosin, triethylene glycol ester of hydrogenated rosin, vinyltoluene copolymer, alkyl aromatics, chroman-indene, depolymerized natural rubber, polybutene and so on. They may be used alone or in a combination of two or more. Also, the molecular weight of such a material is not particularly restricted, but it is preferable to be about 500-5000 as a number average molecular weight.

In case of using the sealant matrix material, the filling amount of the particles is not particularly limited and may be properly selected in accordance with the use purpose, but it is preferable to be not less than 0.1 volume%.

When the great number of the particles 3 are disposed in the interior of the tire according to the invention, a liquid not substantially swelling the continuous layer of the particles may be further added to the interior of the tire. By the addition of such a liquid can be more enhanced the function of sealing the injured portion of the tire in the injuring of the tire to further prolong the running distance after the injuring of the tire.

That is, the particle is high in the fluidity owing to substantially the sphere form and can be easily filled in the interior of the tire-rim assembly through an inlet port having a small inner diameter such as a valve for the tire or the like. On the other hand, when the tire is injured, the particles gather in an inner face of the injured portion so as to blow out from the injured portion toward the outside of the tire. However, an injuring path from the inner face of the injured portion to an outer peripheral face of the tire is not straight but indicates a complicated shape, so that the particles entered from the injured opening at the inner face of the tire checked in the course of the above path, and hence the great number of the particles gather in the inner face of the injured portion at a compressed state to seal the injured portion with these particles. In this case, when the liquid is added to the interior of the tire together with the particles, several to several thousand particles can be gathered based on the affinity between the particle surface and the liquid and the viscosity of the liquid, so that it is possible to instantaneously clog the injured portion with the gathered body of the particles in the injuring of the tire.

Further, the liquid to be added is clearly large in the specific gravity as compared with the particles, so that it largely distributes onto an inner face of a tire tread portion through centrifugal force accompanied with the rotation of the tire during the usual running. This shows that the great number of the particles are existent in the vicinity of the inner face of the tire tread portion as a relatively big gathered body from a time of usual running. Therefore, when the tire is injured by riding over a foreign matter or the like, a greater part of the particles gathered through a relatively large amount of the liquid promptly seal the injured portion, which is very effective.

Moreover, in order to obtain a tire filled with the particles mixed with the liquid, there is the following mind point in view of the production.

Namely, it is preferable to fill the particles into the tire at a high fluidity state or at a dry state before the mixing with the liquid. The particles is mixed with the liquid to form a gather body as previously mentioned. For this end, the particles mixed with the liquid are very low in the fluidity and are difficult to fill into the tire. Therefore, the mixing of the liquid is efficient and sure through a method of applying the liquid onto the inner face of the tire or an inner face of the rim before the filling, or through a method of pouring the liquid into the interior of the tire-rim assembly after the filling of the particles.

The liquid to be used is required to have performances that it does not particularly swell the continuous phase of the particle as previously mentioned or does not cause the chemical reaction therewith, and preferably does not cause the swelling or chemical reaction to the innerliner layer, and further it is stable to heat build-up in the running, and so on. There may be mentioned, for example, silicone oil, aliphatic polyvalent alcohols represented by ethylene glycol and propylene glycol, and so on.

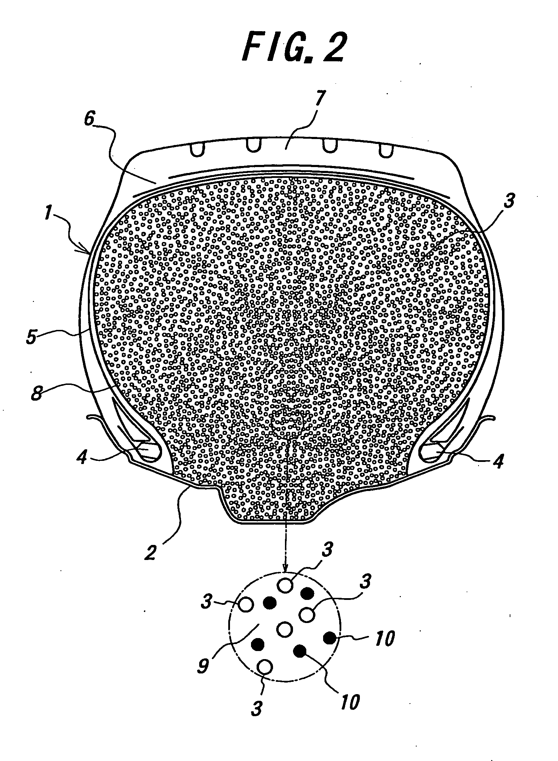

As shown in FIG. 2, the tire-rim assembly can further contain expansion particles 10 capable of expanding volume by stimulation in its interior. The expansion particles 10 are not particularly limited unless the volume can be expanded by stimulation, but it is preferable to comprise a foaming agent and a shell encapsulating a gas produced by expansion of the foaming agent at a closed state. And also, the stimulation is not particularly limited, but includes heat (exothermic, endothermic), pressure, vibration and so on. As the running of the tire is continued at a state of causing an injury by sticking a foreign matter such as nail or the like, a greater amount of heat is caused by friction, so that heat (particularly exothermic) is preferable.

The foaming agent is the same as used in the gas inside the closed cell of the particle and includes at least one selected from nitrogen, air, straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (I):

$$R^1\text{-}O\text{-}R^2 \qquad (I)$$

(wherein each of $R^1$ and $R^2$ is a monovalent hydrocarbon residue having a carbon number of 1 to 5 and may be a saturated hydrocarbon or an unsaturated hydrocarbon and may have a straight or branched structure and contain a ring).

As the foaming agent, use may be made of a pyrolitic foaming agent, a high-pressure compression gas, a liquefied gas and so on. Particularly, the pyrolitic foaming agent producing a gas by pyrolysis is preferable. As the pyrolitic foaming agent are mentioned dinitrosopentamethylene tetramine (DPT), azodicarbon amide (ADCA), paratoluene sulfonyl hydrazine (TSH) and derivatives thereof, oxybisbenzene sulfonyl hydrazine (OBSH) and so on. They may be used alone or in a combination of two or more. As the high-pressure compression gas are mentioned nitrogen, air, carbon dioxide and so on. As the liquefied gas are mentioned propane, butane, pentane, cyclopropane, cyclobutane, cyclopentane and so on.

Moreover, the foaming agent is preferable to start the expansion at a temperature of not lower than 100°C, preferably at a temperature of not lower than 120°C. That is, in the tire inflated under the internal pressure, a case that the interior temperature exceeds 100°C is rare though it is dependent upon environmental conditions. On the other hand, when the tire is run at a state of sticking a foreign matter such as nail or the like even under an exterior environment of -20°C, there may be a case that a temperature around the remaining foreign matter locally rises to not lower than 100°C. In order to surely conduct the expansion even under any environmental conditions, therefore, the expansion starting temperature is preferable to be not lower than 100°C.

The particle size of the expansion particle is not particularly limited, but an average particle size before the expansion through foaming is 1-200 $\mu$m, preferably about 1-40 $\mu$m. When the expansion particles have an average particle size of the above range, the volume expansion ratio is high, and they easily enter into a contact face between the foreign matter and the injured portion, and the effect of sealing the space in the injured portion and the effect of preventing the dropping of the internal pressure are excellent. When the average particle size is less than 1 $\mu$m, even if the expansion is attained, the effect is less from a viewpoint of the volume expansion effect, while when it exceeds 200 $\mu$m, the particles hardly enter into the contact face between the foreign matter and the tire. Also, the expansion particles are preferable to have a volume expansion ability of not less than 5 times at the above expansion starting temperature. When the expansion ability is less than 5 times, if the particles are expanded in the contact face between the foreign matter and the tire, a force sealing a space in the contact face (force directly pushing the surface of the foreign matter or the contact face of the tire) is lacking and it is difficult to obtain a sufficient sealing effect.

In the tire-rim assembly as shown in FIG. 1 or 2, when the particles of substantially a sphere form having a mean bulk specific gravity under an atmospheric pressure of not more than 0.1 are filled together with the sealant matrix material, particles having a mean bulk specific gravity of not more than 0.3 may be co-used if it is intended to guarantee the minimum running required by merely sealing the injured portion instead of compensating a pressure based on the dropping of the internal pressure in the injuring of the tire. In this case, the latter particles may be disposed in the interior of the assembly so that a volume under an atmospheric pressure is not less than 0.2 volume%, preferably not less than 0.5 volume%, more preferably not less than 1.0 volume%, particularly not less than 5.0 volume%.

For the purpose of guaranteeing the minimum running required by merely sealing the injured portion, the rapid dropping of the internal pressure after the injuring of the tire can be controlled if the amount of the particles satisfies the above lower limit, but it is said that it is sufficient to dispose the particles in an amount of 20 volume% considering the deterioration of ride comfort and steering property accompanied with the increase of weight in the tire-rim assembly, and the cost.

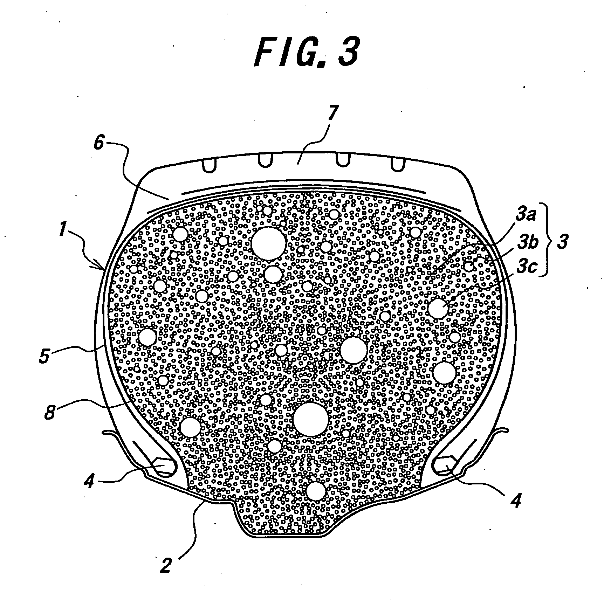

Further, the great number of the particles 3 having a mean bulk specific gravity under an atmospheric pressure of not more than 0.1, which are disposed in the interior of the tire-rim assembly according to the invention, can comprise particles 3a having a diameter under the atmospheric pressure of not less than 10 $\mu$m but less than 1 mm, particles 3b having a diameter of not less than 1 mm but less than 5 mm and particles 3c having a diameter of not less than 5 mm but less than 5 cm as schematically shown in FIG. 3. Moreover, FIG. 3 exaggeratingly shows the diameters of three kinds of the particles, and a diameter ratio among the particles is not necessarily followed to the illustrated one.

That is, when the tire ins injured, for example, when the foreign matter such as nail or the like passes into the interior of the tire and is immediately fallen off therefrom, an open wound formed by the foreign matter is relatively small, so that the relatively small-size particles 3a having a diameter of less than 1 mm are required for sealing the open wound with the particles 3.

On the other hand, when the foreign matter passed into the interior of the tire remains in the tire without falling off over a long time, the open wound formed by the foreign matter largely grows, so that there is a case that the open wound can not be sufficiently sealed with only the particles 3a having a diameter of less than 1 mm. Therefore, it is preferable to mix the particles 3b having a diameter of not less than 1 mm but less than 5 mm.

In addition, when a large injury is caused by pushing a sidewall portion of the tire onto a curbstone, or when a so-called side cut is caused, a size of an open wound extends to, for example, 5 cm as a maximum diameter. In order to surely develop the sealing ability to the open wound even in such a large injury, it is effective to mix the particles 3c having a diameter of not less than 5 mm but less than 5 cm.

As the particle 3c having the diameter of not less than 5 mm but less than 5 cm, it is advantageous to use a compression elastic body as detailedly mentioned below. The compression elastic body means a body changing a volume and developing stress in the compression and having a restoring ability in the releasing of the compression. That is, it is preferable that the compression elastic body comprises a hollow body and a gas or a composite included in an interior of the hollow body. Also, all of plural compression elastic bodies may include a gas in the hollow body or include a composite in the hollow body. Further, a part of plural compression elastic bodies may include a gas in the hollow body, and the reminder may include a composite in the hollow body. Moreover, each of a sort of the hollow body, a sort of the gas and a sort of the composite included in the plural compression elastic bodies may be one or more.

The hollow body in the compression elastic body may have a self-recovering ability of spontaneously turning the hollow body itself into a certain given shape. Especially, when the gas is included in the interior, as mentioned detailedly below, the hollow body is effective to have the self-recovering ability. The hollow body is preferable to have a gas permeation constant at 30°C of $10^{-10}$ - $10^{-9}$ (cc·cm/cm$^2$·s·cmHg).

Concretely, the hollow body is preferable to be made of at least one selected from the group consisting of polyolefin, a thermoplastic polyurethane and a rubber composition having a butyl based rubber. Especially, a thermoplastic polyurethane having a stretchability is preferable. As the polyolefin, mention may be made of polyethylene, polypropylene, polystyrene/polyethylene copolymer and so on, and among them polyethylene is preferable. As the butyl based rubber, mention may be made of a halide of isobutylene/paramethyl styrene copolymer, butyl rubber, a halogenated butyl rubber and so on.

Further, the hollow body has a thickness of 10-200 μm, preferably 20-100 μm and contains the gas or the composite therein. In case of including a gas in the hollow body, various gases can be used. For example, it is advantageous to use a gas having a high stability, which includes an ordinary air or air having an adjusted oxygen partial pressure and/or nitrogen. In case of using both air and nitrogen, any mixing ratio can be adopted. On the other hand, when the composite is included in the interior of the hollow body, it is preferable to comprise a polymer and a continuous cell.

As the polymer constituting the composite, mention may be made of polymers having a polar functional group in their molecules, polyolefins and elastomers, but it is not limited thereto. As the polymer having a polar functional group in its molecule, mention may be made of polyurethane, melamine resin, polyvinyl alcohol resin, an acrylonitrile based polymer, an acrylic polymer, a vinylidene chloride based polymer, acrylonitrile/styrene resin and polyester resin.

As the acrylonitrile based polymer, mention may be made of acrylonitrile polymer, acrylonitrile/methacrylkonitrile copolymer, acrylonitrile/methyl methacrylate copolymer and acrylonitrile/methacrylonitrile/methyl methacrylate terpolymer. As the acrylic polymer, mention may be made of methyl methacrylate resin, methyl methacrylate/acrylonitrile copolymer, methyl methacrylate/methacrylonitrile copolymer and methyl methacrylate/acrylonitrile/methacrylonitrile terpolymer. As the vinylidene chloride based polymer, mention may be made of vinylidene chloride/acrylonitrile copolymer, vinylidene chloride/methyl methacrylate copolymer, vinylidene chloride/ methacrylonitrile copolymer, vinylidene chloride/ acrylonitrile/methyl methacrylate copolymer, vinylidene chloride/methacrylonitrile/methyl methacrylate copolymer and vinylidene chloride/acrylonitrile/methacrylonitrile/methyl methacrylate copolymer. As the polyolefin, mention may be made of polyethylene, polypropylene, polystyrene/ polyethylene copolymer and so on, and among them polyethylene is preferable. As the elastomer, mention may be made of sulfur-curable elastomers such as a halide of isobutylene/ paramethyl styrene copolymer, butyl rubber, a halogenated butyl rubber and the like, and thermoplastic elastomers such as styrene-butadiene-styrene block copolymer and the like.

Moreover, the polymer constituting the composite is preferable to be a polymer having a polar functional group in its molecule, preferably polyurethane.

A size of the continuous cell in the composite can be properly selected in accordance with application or object using the tire and the like and is not particularly limited. However, when the size of the continuous cell is too large, it tends to deteriorate the durability of the composite itself.

Further, the composite is preferable to have a density under an atmospheric pressure of 0.012-0.12 g/cm$^3$, preferably 0.015-0.06 g/cm$^3$. When the density is too high, it tends to increase the tire weight, while when the density is too low, it tends to deteriorate the durability of the composite.

On the other hand, when the composite is made of a foamed body, an expansion ratio under an atmospheric pressure is preferable to be 10-100 times, preferably 20-80 times. When the expansion ratio is too low, it tends to increase the tire weight, while when the expansion ratio is too high, it tends to deteriorate the durability of the composite.

The volume of each compression elastic body used herein can be properly selected in accordance with the purpose and applications and is not particularly limited, but the diameter thereof is preferable to be within a range of the aforementioned particle diameter. Moreover, plural compression elastic bodies are used herein, but they may be the same or different in the volume.

The preparation of the compression elastic body is not particularly limited and may include, for example, the following first to fourth methods. The first to third methods relate to a method of producing the compression elastic body including the composite in its hollow body, and the fourth method relates to a method of producing the compression elastic body including the gas in its hollow body.

The first method is a method wherein a bag-shaped hollow body is provided and a composite is placed therein and thereafter an opening portion of the bag-shaped hollow body is closed. A closing method of the opening portion is dependent upon a material of the hollow body used and the like, but may include, for example, an inner heating system such as a high frequency sealing process, a ultrasonic sealing process and the like, and an outer heating system such as heat sealing process, impulse sealing process and the like.

In the second method, a bag-shaped hollow body is provided and a foamable composition is placed therein. The foamable composition is a composition forming the composite later. Thereafter, the hollow body including the foamable composition is disposed in a mold or the like and shaped.

The third method is a method wherein a foamable composition is placed in a mold or the like and then shaped and expanded. In this case, a non-expanded layer produced as an outermost layer by expansion corresponds to the hollow body.

The fourth method is a method wherein a bag-shaped hollow body is provided and a gas is filled therein and thereafter an opening portion of the bag-shaped hollow body is closed. As the method of closing the opening portion, the aforementioned ones can be used.

Moreover, when a foamable material is used as the composite, a method using a foaming agent is preferable. As the foaming agent, mention may be made of a pyrolitic foaming agent producing a gas by pyrolysis, a high-pressure compression gas, a liquefied gas and so on.

Particularly, a large number of the pyrolitic foaming agents have a characteristic of producing nitrogen, so that the composite obtained by properly controlling the reaction of such a pyrolitic foaming agent contains nitrogen in its cell.

Also, when the foamable material, particularly urethane foam is used as the composite, there may be mentioned a method wherein water is used as a foaming agent and carbon dioxide gas is produced by reacting water with isocyanate as a kind of monomer. Furthermore, there may be mentioned a physical method in which an inert, low boiling point solvent is vaporized by utilizing a reaction heat in the formation of the polymer, and so on.

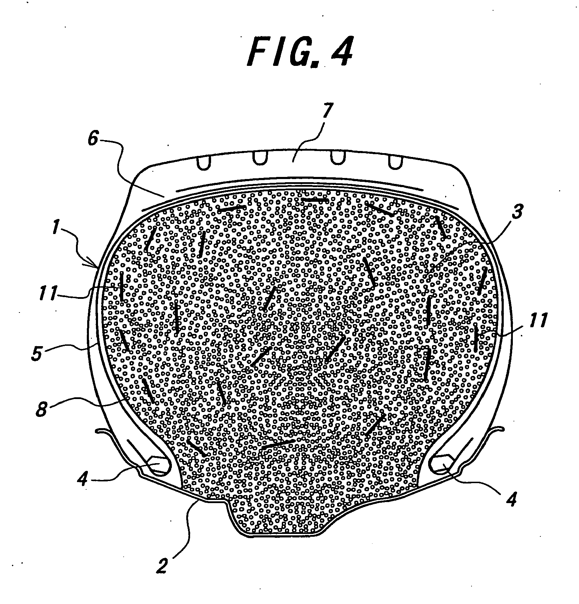

As to the sealing ability of the above open wound, it is advantageous that many sealing sheets 11 having a maximum diameter of not less than 2 cm are disposed in the interior of the tire together with the great number of the particles 3 as shown in FIG. 4. That is, a thermoplastic polyurethane, a polyolefin based resin, a nylon based resin and the like are applicable to the sealing sheet 11, but it is not particularly limited thereto.

The sealing of the open wound can be surely conducted by disposing many sealing sheets 11 in the tire because the sealing sheet 11 acts likewise the aforementioned particles 3a to 3c. In the embodiment of FIG. 4, relatively small-size particles having a diameter of less than 1 mm are shown as the particle 3, but the sealing sheets 11 may be disposed in a mixture of particles having various sizes shown in FIG. 3. That is, either or both of particles having a diameter of not less than 1 mm but less than 5 mm, particles having a diameter of not less than 5 mm but less than 5 cm and sealing sheets 11 can be disposed in the tire in addition to the relatively small-size particles having a diameter of less than l mm.

And also, in order to dispose the sealing sheets in the tire, a method of charging into the tire on the way of the rim assembling and before the fitting onto the bead is simple, but it is not limited thereto. Into the tire-rim assembly after the fitting onto the bead may be filled the sealing sheets previously mixed with the above particle group.

Next, the method of applying a given internal pressure to various tire-rim assemblies as shown in FIGS. 1-4 will be explained in detail.

The tire-rim assembly having the aforementioned structure can be obtained by filling cell-containing particles, in which an internal pressure of the closed cell is controlled to a given range under a pressure environment higher than an atmospheric pressure, in the interior of the tire-rim assembly under a high pressure environment.

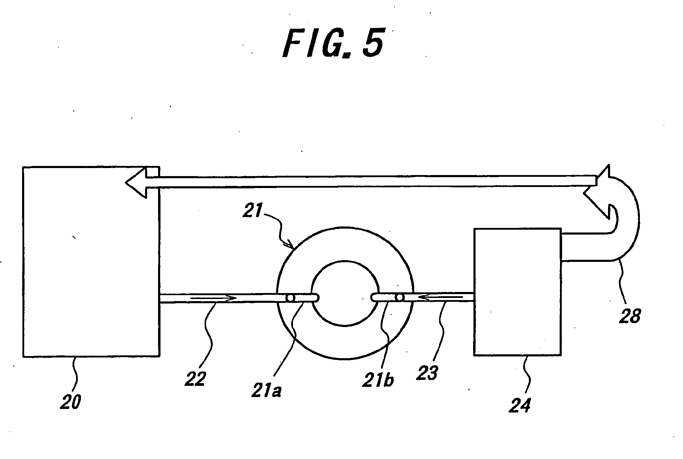

At first, the cell-containing particles of substantially sphere shape are produced by heating and expanding resin particles each encapsulated with a foaming agent such as a liquefied gas or the like. As shown in FIG. 5, a great number of the thus obtained cell-containing particles are stored in a pressure-resistant storage tank 20 filled with a gas such as nitrogen or the like at a higher pressure of not less than 150 kPa, and a tire-rim assembly 21 is connected to the storage tank 20 through a transferring means, and the cell-containing particles inside the storage tank 20 are transferred to the interior of the tire-rim assembly 21 together with the gas in the tank to conduct the filling of the cell-containing particles.

As the transferring means for the cell-containing particles, there can be mentioned a method wherein the storage tank 20 is connected to an inlet port 21 a arranged on the tire-rim assembly 21 through a pipe way 22 and a pipe way 23 extending from an outlet port 21 b arranged at a position separated by 180° from the inlet port 21a of the tire-rim assembly 21 is connected to a diaphragm pump 24 as shown in FIG. 5. In the thus formed continuous pathway, when the diaphragm pump 24 is actuated to form suction stream shown by arrow in the pipe ways 22 and 23, the cell-containing particles inside the storage tank 20 can be led to the interior of the tire-rim assembly 21.

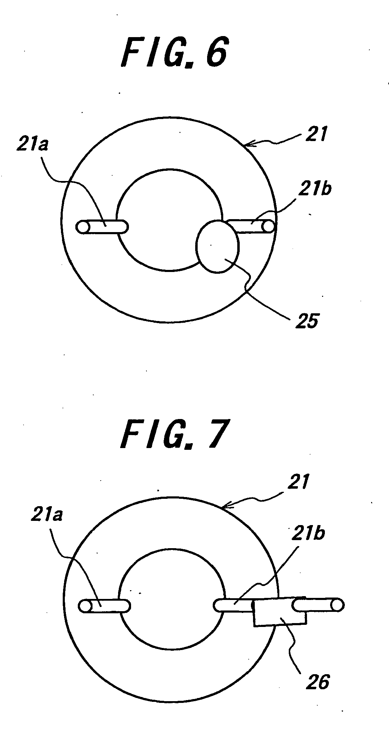

In this case, a filter 25 passing the gas but not passing the cell-containing particles is attached to the outlet port 21 b of the tire-rim assembly 21 as shown in FIG. 6, or a filter 26 similar to the above is arranged in a connecting portion of the pipe way 23 as shown in FIG. 7, whereby only the gas is led to the outside of the tire-rim assembly 21 and the cell-containing particles can be left in the interior of the tire-rim assembly 21.

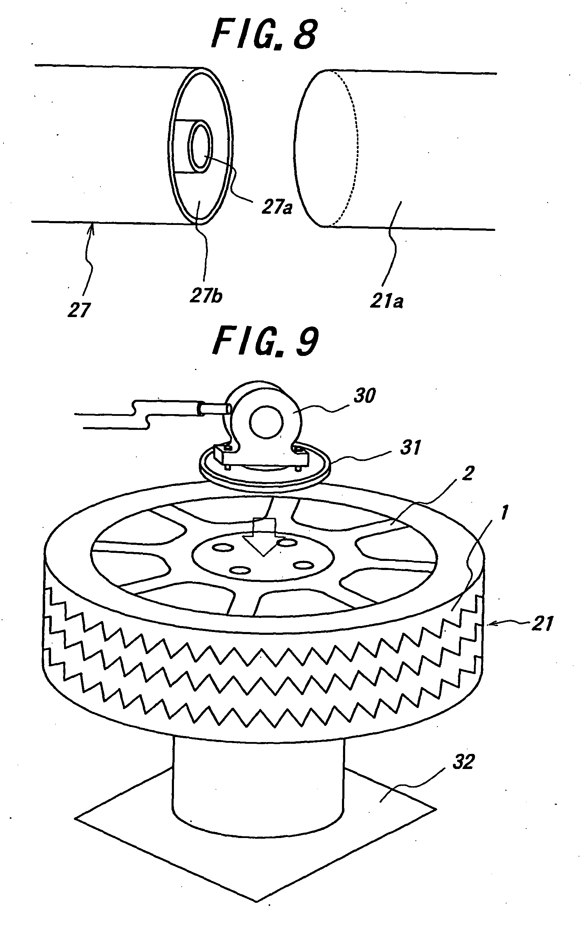

On the other hand, a pipe way 27 of a double-pipe structure as shown in FIG. 8 is connected to the inlet port 21 a without arranging the outlet port 21 b in the tire-rim assembly 21, whereby the gas and the cell-containing particles can be supplied through an inner pipe 27a and a gas inside the tire can be sucked through an outer pipe 27b.

In any case, the filling of the cell-containing particles is carried out while sucking the gas or the like inside the tire to the outside, but it is possible to conduct the filling of the cell-containing particles without sucking the gas inside the tire. In case of filling small-size cell-containing particles having an average particle size of not more than 1 mm, however, it is desirable to suck air inside the tire for avoiding the clogging of the neighborhood of the inlet port with such particles. Incidentally, the transferring rate of the cell-containing particles can be changed in accordance with a suction amount.

As shown by arrow 28 in FIG. 5, a gas discharged from the diaphragm pump 24 is led to the storage tank 20 to form an annularly closed system of "storage tank → tire-rim assembly → storage tank → ····· ". In this case, it is advantageous to conduct the filling of the cell-containing particles while maintaining the interior of such a system at a pressurized state.

That is, when the cell-containing particles compressed under a higher pressure in the storage tank 20 are filled in the interior of the tire-rim assembly, if the pressure in the interior is turned to the atmospheric pressure, a restoring force of volume is acted to push the cell-containing particles onto the inner face of the tire and hence tension is created in the tire. This tire tension is a most important factor developing various tire performances and plays a role of air in the ordinary pneumatic tire.

The inventors have aimed at the recovering force of the compressed cell-containing particles and made various studies with respect to a method of filling the cell-containing particles capable of providing performances as a safety tire into the interior of the tire-rim assembly while utilizing the above action to maintain performances required as the tire, and as a result the above method has been established.

Moreover, the tire filled with the cell-containing particles without compression does not create a case tension, and has the following drawbacks.

Firstly, rigidities to inputs such as traction force, braking force, lateral force and the like in the running are absolutely lacking, so that the behavior of the vehicle can not be stabilized and the tire is not said to be a safety tire.

Secondly, the deflection to the load becomes large, and the deformation amount of the cell-containing particle in the tire increases. This promotes heat build-up based on hysteresis loss of the cell-containing particles but also accelerates the breakage or creep of the cell-containing particles.

In the invention, the inlet port 21a for the cell-containing particles and the outlet port 21 b for extra air inside the tire shown in FIG. 5 are desirable to be arranged in plural number. In addition, it is preferable that the inlet port and the outlet port are existent at symmetrical positions on the circumference with respect to a rotating axis of the tire. Because, the cell-containing particles tend to be filled (consolidated) in the vicinity of the inlet port and the outlet port in a high density, so that the weight distribution of the cell-containing particles is non-uniformized to cause the deterioration of tire uniformity. This induces the occurrence of vibration during the rotation of the tire, which causes the deterioration of ride comfort, steering stability and fuel consumption. As a countermeasure for solving this inconvenience, it is effective to arrange the inlet port and the outlet port in symmetrical positions with respect to the rotating axis of the tire.

As another means for improving the uniformity, a method of filling the cell-containing particles while applying vibrations to the tire is also effective. This promotes the movement of the cell-containing particles by the application of vibrations and is made possible to avoid the consolidation into a particular position and expected to have an effect of avoiding the clogging in the interior of the pipe with the powder by the application of vibrations.

Moreover, the application of vibrations brings about the increase of the filling density of the cell-containing particles (decrease of apparent volume) and there is a possibility that a space having no cell-containing particles is formed in the interior of the tire. Therefore, it is advantageous to conduct the application of vibrations in the filling.

As a process of applying vibrations, there can be used a jig capable of simply attaching or detaching a wheel cap 31 fixed with a ball vibrator 30 made by Exxen Corporation rotating a steel ball through a compressed air to the assembly 21 of the tire 1 and the rim 2 as shown in FIG. 9. Also, it is possible to use a hitting type vibration applying machine.

Such a vibration applying means may be directly arranged on the tire-rim assembly as a detachable one, or may be arranged at a side of the filling apparatus such as a stand 32 (see FIG. 9) holding the tire -rim assembly or the like.

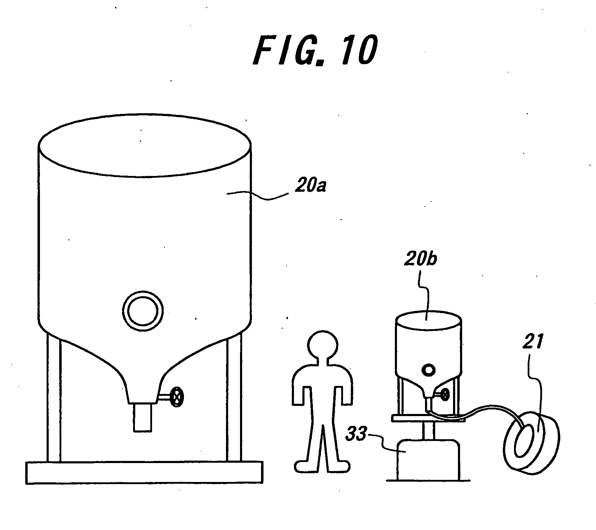

As shown, for example, in FIG. 10, the storage tank 20 for the cell-containing particles comprises a first tank 20a and a second tank 20b in which a given amount of the cell-containing particles measured from the first tank 20a is transferred to the second tank 20b and an amount of the cell-containing particles accurately weighed from the second tank 20b is filled in the tire-rim assembly 21. In this case, the first tank 20a is not suitable in the precise weighing because it is large-size for stocking a great amount of the material, so that the weighing function is preferable to be provided to the second tank 20b. That is, a precise filling amount can be derived by previously weight a given amount of the cell-containing particles, and transferring them into the second tank 20b, and measuring a weight reduced through the filling into the tire. In this case, both the filling and weighing are realized by placing the second tank 20b on, for example, a balance 23 and conducting the filling at such a state.

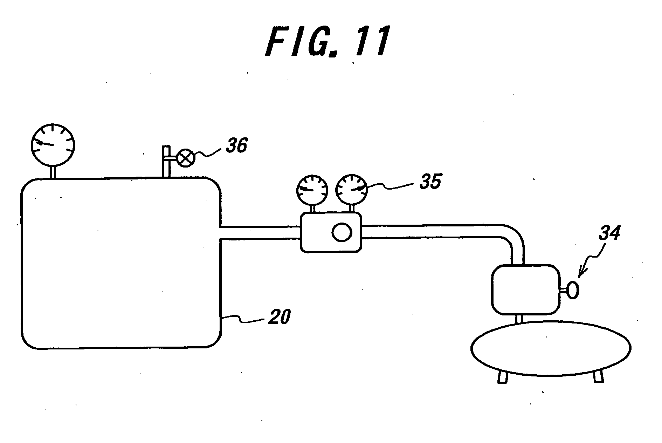

Further, the storage tank is preferable to have a pressure changing function for adjusting a pressure and a pressure sensor. That is, it is possible to fill the cell-containing particles adjusted to a given pressure by adjusting a pressure inside the storage tank through the pressure changing function. For instance, as shown in FIG. 11, a compressed air obtained by using an air compressor 34 is introduced into the storage tank 35 through a regulator 35, and a pressure can be changed by arranging a valve for leaking (leak valve) 36 on the storage tank 20.

As the gas adjusted to a desired pressure through the regulator 35 is always supplied, even if the pressure is dropped by leaking at the side of the tank 20, the pressure is automatically increased to the desired value. Furthermore, it is preferable to arrange a filter on the leak valve 36 so as not to move the cell-containing particles out from the inside of the tank.

In the thus obtained tire-rim assembly, a necessary casing tension can be given to the tire. That is, a tension corresponding to the tire internal pressure is given by disposing the cell-containing particles in the interior of the tire instead of filling air in the interior of the tire, so that there is established a new method of applying the internal pressure different from the conventional method.

According to the invention, a new tire-rim assembly can be provided only by subjecting any tires and any rims to a minimum working without requiring the changing and controlling of the tire structure. Even if the tire in such an assembly is subjected to an external injury by riding over, for example, a nail or the like, the drop of the casing tension as in the ordinary pneumatic tire is not easily caused. Because, when the external injury is caused in the tire to dissipate the compressed gas from the interior of the tire toward the outside, a pressure surrounding the cell-containing particles drops, but the volumes are increased by the recovering force of the compressed cell-containing particles to newly create a casing tension. Thus, there is no occurrence of puncture state as in the conventional pneumatic tire.

Even when the size of the cell-containing particle is small, a probability of going out the cell-containing particles from the external injury toward the outside of the tire is very low, and there is no problem against the injury under the usually used conditions.

Now, the tires are products amounted onto vehicles through various markets from their makers. There are mainly a case that the tire is supplied from a tire maker to a car manufacturing maker and mounted onto a new car by the manufacturing maker, and a case that an owner for the vehicle takes a tire from a tire selling shop, so that there are many parties for supplying the tires.

Since an internal pressure is applied to the conventional tire through a medium such as air, it is possible to conduct the filling of air in any sites, so that the selling of the tire itself is sufficient as the tire supplying system. However, the tire-rim assembly in which the internal pressure is applied by filling the cell-containing particles is premised on the filling of the cell-containing particles, so that it is an urgent business to establish a supply system peculiar to the tire filled with the cell-containing particles.

The inventors have earnestly investigated a supplying means suitable for the tire filled with the cell-containing particles and found the following supply method and a service method accompanied therewith.

Firstly, the following methods (A)-(C) are advantageously adaptable as the supply method for the tire filled with the cell-containing particles.

(A) In the course of transferring the tire-rim assembly filled with the cell-containing particles to its supply party, the interior of the tire-rim assembly including the cell-containing particles is adjusted to a given pressure. This method is suitable for a case that a sufficient time for rendering the internal pressure of the closed cell(s) in the cell-containing particles into a given internal pressure is promised until the arrival to the supply party, for example, a case that the supply party is an out-of-the-way or the like, particularly a case that the tire-rim assembly are exported to various overseas countries.

(B) After the interior of the tire-rim assembly filled with the cell-containing particles is adjusted to a given pressure, such a tire-rim assembly is transferred to a supply party. This method is suitable for a case that there is a high possibility that the storage of the tire-rim assembly is possible over a constant period until at least an internal pressure of the closed cell(s) in the cell-containing particles reaches a given pressure and thereafter a tire user immediately takes and uses such a tire-rim-assembly.

(C) The cell-containing particles are transferred to a supply party for the tire-rim assembly at a stored state under an environment of a given pressure, and then the cell-containing particles in which a pressure inside the closed cell(s) is maintained at a given pressure are filled into interiors of tire-rim assemblies existing in the supply party or tire-rim assemblies transferred aside from the cell-containing particles at the side of the supply party. That is, the filling of the cell-containing particles is conducted at the supply party. For example, when the cell-containing particles are transferred to a tire selling shop at a state of storing under a high pressure environment, it is also possible to fill the cell-containing particles into a tire-rim assembly previously mounted onto a vehicle, i.e. active tire-rim assemblies, whereby it is made possible to newly act the conventional tire as a safety tire. This method is suitable for a case that a tire user desires to take and use a tire-rim assembly according to the invention on the spot, in which the tire user can freely select a combination of a kind of tire, a size, bland and design of a wheel and so on.

Furthermore, even when the tire user have previously the tire-rim assembly or takes only either a tire or a rim, it is possible to supply the tire-rim assembly according to the invention, so that the above method can meet various needs of consumers.

Next, an embodiment of a customer service will be described with respect to a driver for a vehicle mounted with tire-rim assemblies supplied according to either of the above supply methods (A) to (C).

In the enforcement of this service, an internal pressure sensor is first arranged on the tire-rim assembly, while a vehicle is required to be provided with an end equipment for transmitting particular information including a position information and information relating to tire trouble, such as a radio apparatus, PHS, a mobile telephone provided with a function of GPS (global positioning system), a navigation system or the like.

Moreover, as the "particular information" used herein, there are concretely mentioned an internal pressure of a tire, a vehicle position, a kind of a vehicle, a tire size, a mounting position of a tire producing trouble and so on.

When abnormal dropping of the internal pressure is detected by the internal pressure sensor, the particular information is transmitted from the end equipment. It is preferable to automatically transmit this information.

Then, the transmitted particular information is transmitted through a communication control section such as telephone lines, satellite communications or

The following examples are given in illustration of the invention and are not intended as limitations thereof.

Examples 1-12, Comparative Examples 1-5

There are prepared assemblies of passenger car tires having a tire size of 175/70R13 with a rim having a size of 5Jx13 and assemblies of safety tires for truck and bus having a tire size of 11R22.5 with a rim having a size of 750x22.5 by applying particles having various specifications shown in Tables 1 and 2 to a tire having a structure shown in FIG. 1 as shown in the same tables. Here, the tire 1 is according to general structure of the interest tire kind and size. Moreover, a kind of a resin composition constituting a continuous phase of the particle in Tables 1 and 2 is shown in Table 3. The resin particles encapsulating a gas component therein as shown in Table 3 are heated and expanded to form particles, and the thus obtained particles are charged into an interior of the tire at various mean bulk specific gravities as shown in Tables 1 and 2. Similarly, a kind of rubber for an innerliner layer is shown in Table 4.

Here, an inner volume of the tire in Tables 1 and 2 is defined by a volume closed by the tire and the rim. Therefore, the inner volume of the tire can be determined from an increment of a weight by assembling the tire onto the rim and filling a non-compression fluid having a known specific gravity such as water or the like into an interior thereof, so that water is used at this time.

And also, a volume amount of the particles used under an atmospheric pressure is measured according to the following equation.

Volume amount of particles used under an atmospheric pressure = total weight of particles filled in tire/mean bulk specific gravity of particles under an atmospheric pressure

With respect to the thus obtained tires, a deflection amount of the tire is measured before and after a drum test over a distance of 5000 km under conditions that the safety tire for passenger car is run at a speed of 90 km/h under a load of 3.53 kN and the safety tire for truck and bus is run at a speed of 60 km/h under a load of 26.46 kN, and a deflection displacement before and after the drum test (tire height before the running under loading - tire height after the running under loading) is represented by an index on the basis that the tire height before the running under loading is 100. The smaller the index value, the better the result.

Now, the bearing of the load means that force durable to external force is existent in the interior of the tire. This force is developed by air existing inside the tire in the conventional tire, while it is developed by the particles filled in the interior of the tire and gas existing in spaces around the particles in the tire according to the invention. When both are contended with each other, the tire holds an original shape and does not cause troubles in the running, but as the force from the interior of the tire is decreased by leaking air from the interior or the like, the tire is gradually deformed by a force from exterior to cause a deflection phenomenon. The leakage of air from the interior means that air filled inside the tire leaks out toward the outside of the tire in case of the conventional pneumatic tire, and means that in case of the tire according to the invention, a gas leaked from the inside of the cell in the particles toward the exterior of the particle or the space around the particle and the gas originally existing in the spaces around the particles leak out toward the outside of the tire.

In the invention, therefore, an increasing ratio of the deflection amount in the tire is measured as an indication grasping a change of load supporting ability of the tire.

Furthermore, the passenger car tire after the above drum test is mounted onto a passenger car of 1500 cc class and a nail having a diameter of 3 mm and a length of 3 cm is passed through the tread from an outside of a tire tread to form an external injury, and then the car is run on a test circuit course at a speed of 90 km/h under a load capacity corresponding to four crewmen weight over a maximum distance of 300 km, during which an available running distance of not less than 200 km is made successful. On the other hand, the tire for truck and bus after the above drum test is subjected to external injury by passing a nail having a diameter of 5 mm and a length of 8 cm from an outside of the tire tread through the tread, and then mounted onto a truck, which is run on a test circuit course at a speed of 60 km/h under a 100% load over a maximum distance of 100 km, during which an available running distance of not less than 40 km is made successful.

These measured results are also shown in Tables 1 and 2.

Table 1

| | Comparative Example 1 | Comparative Example 2 | Example 1 | Example 2 | Example 3 | Comparative Example 3 | Example 4 | Example 5 | Example 6 | Example 7 |
|---|---|---|---|---|---|---|---|---|---|---|
| Kind of composition constituting hollow particles | - | No. 1 | No. 1 | No. 2 | No. 3 | No. 4 | No. 5 | No. 6 | No. 7 | No. 8 |
| Volume amount of hollow particles used under an atmospheric pressure (1) (*1) | - | 18.9 | 18.9 | 18.9 | 18.9 | 18.9 | 18.9 | 18.9 | 18.9 | 18.9 |
| Kind of gas component in cell | - | propane | propane | cyclopropane | hexane | nitrogen | nitrogen | isobutane | isopentane | isobutane |
| Mean bulk specific gravity (g/cc) | - | 0.05 | 0.05 | 0.06 | 0.095 | 0.11 | 0.06 | 0.022 | 0.019 | 0.023 |
| Initial tire internal pressure (pressure of gas around hollow particles: kPa) (*2) | 300 | 140 | 150 | 180 | 200 | 200 | 250 | 300 | 300 | 300 |
| Kind of innerliner rubber | A | A | A | A | A | A | A | B | B | B |

(continued)

| | Compar-ative Example 1 | Comparative Example 2 | Example 1 | Example 2 | Example 3 | Compar-ative Example 3 | Example 4 | Example 5 | Example 6 | Example 7 |
|---|---|---|---|---|---|---|---|---|---|---|
| Ratio of changing deflection amount before and after drum test | 2.2 | 5.3 | 4.7 | 3.6 | 2.5 | 2.7 | 2.1 | 1.6 | 1.6 | 1.6 |
| Available running distance after the injuring of tire (km) (*3) | 1.3 km tire breakage | 170 km trouble | 220 km trouble | 225 km trouble | 205 km trouble | 175 km trouble | 240 km trouble | 300 km complete run | 300 km complete run | 300 km complete run |

(*1) Inner volume of tire : 21 liters, size : 175/70R13 + rim : 5J-13
(*2) Tire internal pressure is adjusted while preventing leakage of particles through a filter after hollow particles are filled in tire
(*3) Running distance of not less than 200 km is made successful

Table 2

| | Comparative Example 4 | Comparative Example 5 | Example 8 | Example 9 | Example 10 | Example 11 | Example 12 |
|---|---|---|---|---|---|---|---|
| Kind of composition constituting hollow particles | - | No. 1 | No. 1 | No. 5 | No. 6 | No. 7 | No. 8 |
| Volume amount of hollow particles used under an atmospheric pressure (1) (*1) | - | 114 | 114 | 114 | 114 | 114 | 114 |
| Kind of gas component in cell | - | propane | propane | nitrogen | isobutane | isopentane | isobutane |
| Mean bulk specific gravity (g/cc) | - | 0.05 | 0.05 | 0.06 | 0.022 | 0.019 | 0.023 |
| Initial tire internal pressure (pressure of gas around hollow particles: kPa) (*2) | 800 | 1000 | 900 | 800 | 800 | 800 | 800 |
| Kind of innerliner rubber | A | A | A | A | A | A | A |
| Ratio of changing deflection amount before and after drum test | 5.1 | 4.3 | 4.7 | 5.1 | 5.2 | 5.2 | 5.1 |
| Available running distance after the injuring of tire (km) (*3) | 1.0 km tire breakage | 15 km trouble | 42 km trouble | 54 km trouble | 60 km trouble | 56 km trouble | 51 km trouble |
| (*1) Inner volume of tire : 21 liters, size: 11R22.5, rim : 750 × 22.5 <br> (*2) Tire internal pressure is adjusted while preventing leakage of particles through a filter after hollow particles are filled in tire <br> (*3). Running distance of not less than 40 km is made successful | | | | | | | |

**EP 1 914 091 B1**

Table 3

| No. | Compound name of continuous phase | Manufacturer | Trade mark | Gas component include in cell | Mean bulk specific gravity (g/cc) |
|---|---|---|---|---|---|
| 1 | acrylonitrile polymer | - | trial product | propane | 0.05 |
| 2 | acrylonitrile/ methacrylonitrile copolymer | - | trial product | cyclopropane | 0.06 |
| 3 | vinylidene chloride/ acrylonitrile/ mehacrylonitrile terpolymer | - | trial product | hexane | 0.095 |
| 4 | acrylonitrile/ methacrylonitrile copolymer | - | trial product | azodicarbonamide | 0.11 |
| 5 | methyl methacrylate/ acrylonitrile copolymer | - | trial product | azodicarbonamide | 0.06 |
| 6 | methyl methacrylate/ acrylonitrile copolymer | Aquzo-Novel Corp. | EXPANCEL 053 | isobutane | 0.022 |
| 7 | methyl methacrylate/ acrylonitrile/ methacrylonitrile terpolymer | Aquzo-Novel Corp. | EXPANCEL 091 | isopentane | 0.019 |
| 8 | vinylidene chloride/ acrylonitrile copolymer | Aquzo-Novel Corp. | EXPANCEL 461 | isobutane | 0.023 |

Table 4

| Kind of innerliner rubber | A | B |
|---|---|---|
| nylon 11 (made by Atochem. Co., Ltd. : Rilsan BMNO) | - | 8 |
| nylon 6/66 copolymer (made by Toray Industries Inc. : Amilan CM6001) | - | 32 |
| nylon 6/66 copolymer (made by Toray Industries Inc. : Amilan CM6041) | - | - |
| Br-IPMS (Exxon Chemical Co., Ltd. : EXXPRO 89-4) | - | 60 |
| HNBR (Nippon Zeon Co., Ltd. : Zetpol 1020) | - | - |
| ENR (made in Malaysia : 50% Epoxidized Natural Rubber) | - | - |
| NR | - | - |
| BR | - | - |
| butyl rubber (JSR BUTYL 065) | 100 | - |
| carbon black (Tokai Carbon, Co., Ltd. Seast V) | 70 | - |
| spindle oil | 11 | - |

(continued)

| Kind of innerliner rubber | A | B |
|---|---|---|
| stearic acid | 0.5 | 0.6 |
| zinc stearate | - | 1.2 |
| MAGUNESIUM OXIDE (Kamishima Kagaku Kogyo Co., Ltd.) | 1.0 | - |
| Accelerator DM (Kawaguchi Kagaku Kogyo Co., Ltd. ACCEL DM) | 1.0 - | - |
| Cumarone indene resin (Mitsubishi Chemical Corp., Cumarone NG) | 10.0 - | - |
| zinc white | 0.5 | 0.3 |
| Accelerator M (Ouchi-Shinko Chemical Co., Ltd. NOCCELER M) | - | - |
| Accelerator TT (Ouchi-Shinko Chemical Co., Ltd. NOCCELER TT) | - | - |
| Accelerator DPG (Ouchi-Shinko Chemical Co., Ltd. NOCCELER D,D-T) | 0.1 | - |
| Vulcanization accelerator (Ouchi-Shinko Chemical Co., Ltd. NOCCELER NS-F) | - | - |
| powdery sulfur | 1.0 | - |
| Method of charging crosslinking agent Method of charging crosslinking agent | Rubber milling | Rubber milling |
| Gelation ratio (%) | - | 83 |
| Gas permeation constant ($10^{-12}$ cc·cm/cm$^2$·sec.·cmHg) | 200 | 11 |

Measurement of gas permeation constant:

Model MT-C3 made by Toyo Seiki Seisakusho

JIS K7126 (1987)

(Test method (A-method) of gas permeation in plastic film and sheet)

Examples 13-23, Comparative Examples 6-9

There are prepared assemblies of safety tires for passenger car having a tire size of 205/60R15 with a rim having a size of 6J×15 by applying particles having various specifications shown in Table 5 to a tire having a structure shown in FIG. 1 as shown in the same table. Also, there are prepared assemblies of tires for truck and bus having a tire size of 11R22.5 with a rim having a size of 750x22.5 by applying having various specifications shown in Table 6 as shown in the same table. Here, the tire 1 is according to general structure of the interest tire kind and size. Moreover, a kind of a resin composition constituting a continuous phase of the particle in Tables 5 and 6 is shown in the above Table 3. The resin particles encapsulating a gas component therein as shown in Table 3 are heated and expanded to form particles, and the thus obtained particles are charged into an interior of the tire at volume filling ratios shown in Tables 5 and 6. Similarly, a kind of rubber for an innerliner layer is shown in the above Table 4.

With respect to the thus obtained tires, the deflection amount of the tire is measured in the same manner as in Example 1, from which a deflection displacement before and after the drum test (tire height before the running under loading - tire height after the running under loading) is represented by an index on the basis that the tire height before the running under loading is 100. The smaller the index value, the better the result. And also, an available running distance is measured after each of the tires after the drum test is subjected to an external injury by passing a given nail from the outside of the tire tread through the tread in the same manner as in Example 1.

The measured results are also shown in Tables 5 and 6.

EP 1 914 091 B1

Table 5

| | Comparative Example 6 | Comparative Example 7 | Example 13 | Example 14 | Example 15 | Example 16 | Example 17 | Example 18 | Example 19 |
|---|---|---|---|---|---|---|---|---|---|
| Kind of composition constituting hollow particles | - | No.1 | No.1 | No.2 | No.3 | No.4 | No.6 | No.7 | No.8 |
| Volume amount of hollow particles used under an atmospheric pressure (l) | - | 21.28 | 22.80 | 30.40 | 36.48 | 24.32 | 33.44 | 33.44 | 45.60 |
| Kind of gas component in cell | - | propane | propane | cycropropane | hexane | nitrogen | isobutane | isopentane | isobutane |
| Volume filling ratio of hollow particles (%) (*1) | - | 70 | 75 | 100 | 120 | 80 | 110 | 110 | 150 |
| Content of component having a specific gravity of not less than 0.79 in all hollow particles (mass%) | - | 16.0 | 16.0 | 16.2 | 16.2 | 16.1 | 16.3 | 16.3 | 16.3 |
| Kind of innerliner rubber | A | A | A | A | A | B | B | B | B |
| Initial tire internal pressure (kPa) (*2) | 300 | 300 | 300 | 300 | 300 | 150 | 280 | 270 | 270 |

(continued)

| | Comparative Example 6 | Comparative Example 7 | Example 13 | Example 14 | Example 15 | Example 16 | Example 17 | Example 18 | Example 19 |
|---|---|---|---|---|---|---|---|---|---|
| Ratio of increasing deflection amount before and after drum test | 2.3 | 2.3 | 2.3 | 2.3 | 2.5 | 2.3 | 2.3 | 2.3 | 2.7 |
| Available running distance after the injuring of tire (km) (*3) | 1.5 km tire breakage | 160 km trouble | 300 km complete run | 300 km complete run | 250 km trouble | 300 km complete run | 285 km trouble | 260 km trouble | 225 km trouble |
| (*1) Inner volume of tire : 30.4 liters<br>(*2) Tire internal pressure is adjusted while preventing leakage of particles through a filter after hollow particles are filled in tire<br>(*3) Running distance of not less than 200 km is made successful | | | | | | | | | |

Table 6

| | Comparative Example 8 | Comparative Example 9 | Example 20 | Example 21 | Example 22 | Example 23 |
|---|---|---|---|---|---|---|
| Kind of composition constituting hollow particles | - | No. 1 | No. 1 | No. 6 | No. 7 | No. 8 |
| Volume amount of hollow particles used under an atmospheric pressure (1) | - | 84 | 90 | 102 | 120 | 144 |
| Kind of gas component in cell | - | propane | propane | isobutane | isopentane | isobutane |
| Volume filling ratio of hollow particles (%) (*1) | - | 70 | 75 | 85 | 100 | 120 |
| Content of component having a specific gravity of not less than 0.79 m all hollow particles (mass%) | - | 16.0 | 16.0 | 16.2 | 16.2 | 16.1 |
| Kind of innerliner rubber | A | A | A | A | A | A |
| Initial tire internal pressure (kPa) (*2) | 800 | 800 | 800 | 800 | 800 | 800 |
| Ratio of increasing deflection amount before and after drum test | 5.2 | 4.2 | 4.7 | 4.8 | 4.5 | 4.2 |

(continued)

|  | Comparative Example 8 | Comparative Example 9 | Example 20 | Example 21 | Example 22 | Example 23 |
|---|---|---|---|---|---|---|
| Available running distance after the injuring of tire (km) (*3) | 1.0 km tire breakage | 18 km trouble | 60 km trouble | 65 km trouble | 56 km trouble | 43 km trouble |

(*1) Inner volume of tire : 120 liters, size : 11R22, 5, rim : 750x22.5
(*2) Tire internal pressure is adjusted while preventing leakage of particles through a filter after hollow particles are filled in tire
(*3) Running distance of not less than 40 km is made successful

Examples 24-33, Comparative Examples 10-11

[Measurement of thermal expansion starting temperature in particles]

A thermal expansion starting temperature in Table 8 is a temperature in the rising of displacement when expansion displacement is measured under the following conditions.

Instrument: Nishizawa PERKIN-ELMER 7 Series
(Thermal Analysis System)
Measuring conditions: temperature rising rate of 10°C/min, temperature in start of measurement of 25°C, temperature in termination of measurement of 200°C
Measuring physical amount: measurement of expansion displacement by heating

The results measured on the thermal expansion starting temperature of each of the particles used in the invention are shown in Table 8.

[Measurement of inner volume of tire-rim assembly]

The measurement of the inner volume of the tire-rim assembly is explained according to the following procedures.
Procedure 1-1: A non-compressive fluid having a known specific gravity such as water or the like is filled in the tire-rim assembly under an atmospheric pressure while maintaining a state of not applying a load thereto, and a weight after the filling is measured to obtain an initial inner volume $V_0$ (liter) of the tire-rim assembly.
By the above procedure is determined an inner volume of the tire-rim assembly under an atmospheric pressure as a tire internal pressure at a no-loading state.
Procedure 2-1: Air of room temperature is filled while maintaining the state of not applying the load to the tire-rim assembly to obtain a given internal pressure $P_2$. At this time, the tire is expanded by the internal pressure, and hence an inner volume $V_2$ at the given internal pressure increases as compared with the initial inner volume $V_0$.
Procedure 2-2: A volume V1 of air discharged by opening a tire valve under an atmospheric pressure is measured by an integrating flowmeter. At this time, the tire expanded to $V_2$ by the internal pressure turns back to the initial inner volume $V_0$. Moreover, DCDRY gas meter DC-2C and intelligent counter SSF, made by Shinagawa Seiki Co., Ltd. are used as the integrating flowmeter.
Procedure 2-3: The inner volume of the tire at the given internal pressure is determined by the following equation (1):

$$P_1 \times (V_0 + V_1) = P_2 \times V_2 \cdot \cdot \cdot \cdot \cdot (1)$$

wherein

$V_0$ = initial inner volume of tire-rim assembly (liter)

$P_1$ = atmospheric pressure (absolute pressure: kPa)
$V_1$ = air volume under an atmospheric pressure (liter)
$P_2$ = given internal pressure (absolute pressure: kPa)
$V_2$ = inner volume of tire-rim assembly set to the given internal pressure under no load (liter)

By the above procedure is determined an inner volume of the tire-rim assembly at each internal pressure under no load.

Procedure 3-1: Air of room temperature is filled while maintaining the state of not applying the load to the tire-rim assembly to obtain a given internal pressure $P_2$.

Procedure 3-2: The tire-rim assembly is pushed onto a road surface or the like under a given load to measure an internal pressure $P_3$ by a pressure sensor. Since the tire is deflected by applying the above load, an inner volume $V_3$ of the tire-rim assembly at the loaded state decreases as compared with the inner volume $V_2$ of the tire-rim assembly at a state of not applying the load. By such a decreasing action of the inner volume is increased a tire internal pressure $P_3$ at the loaded state as compared with the tire internal pressure $P_2$ at a state of not applying the load. Moreover, a pressure transducer with an amplifier PA-400-353G, made by Copal Denshi Co., Ltd., is used as the pressure sensor.

Procedure 3-3: An inner volume $V_3$ of the tire-rim assembly under the given load is determined by the inner volume $V_2$ of the tire-rim assembly under the given internal pressure at the state of not applying the load determined according to the procedures 2-1 to 2-3 and the following equation (2):

$$P_2 \times V_2 = P_3 \times V_3 \cdots \cdots (2)$$

wherein

$P_2$ = given internal pressure (absolute pressure: kPa)
$V_2$ = inner volume of tire-rim assembly set to a given internal pressure under no load (liter)
$P_3$ = tire internal pressure when a given load is applied to the tire set to the given internal pressure (absolute pressure: kPa)
$V_3$ = inner volume of tire-rim assembly when a given load is applied to the tire set to the given internal pressure (liter)

By the above procedures is determined an inner volume of the tire-rim assembly at each internal pressure under a load. The results measured on the inner volume of the tire-rim assembly at each internal pressure under each load are shown in Table 9.

[Inspection of effects at tire]

There are prepared assemblies of safety tires for passenger car having a tire size of 175/70R13 with a rim having a size of 5J×13 by applying particles having various specifications shown in Table 7 to a tire having a structure shown in FIG. 1 as shown in the same table. Here, the tire 1 is according to general structure of the interest tire kind and size. Moreover, a kind of a resin composition constituting a continuous phase of the particle in Table 7 is shown in Table 8. The resin particles encapsulating a gas component therein as shown in Table 8 are heated and expanded to form particles, and the thus obtained particles are charged into an interior of the tire-rim assembly at volume filling amounts shown in Table 7. Moreover, a kind of rubber for an innerliner layer is shown in the above Table 4.

Then, a nitrogen gas is filled into the passenger car tire-rim assembly to adjust an internal pressure to 200 kPa, and such an internal pressure is held at room temperature for 20 days. The thus obtained test tire is mounted onto a passenger car of 1500 cc class, and then a ride comfort against vibrations under usual internal pressure is evaluated by a professional driver in a 10-point rating. In the evaluation results, the higher the point, the better the result.

Thereafter, the passenger car of 1500 cc class is set to a load capacity corresponding to four crewmen weight and the test tire is mounted onto a left front wheel thereof to measure an axel weight at the left front wheel of this vehicle. As a result, the axel weight of the left front wheel is 3.92 kN. After four nails each having a diameter of 5.0 mm and a length of 50 mm are passed from a tread surface of the test tire toward an interior thereof in places to confirm the dropping of the tire internal pressure to an atmospheric pressure, such a tire is run on a test circuit course at a speed of 90 km/h, during which a temperature inside the tire-rim assembly and a pressure in spaces around the particles are continuously measured to examine a state of developing an internal pressure recovering function. In the tire-rim assembly to be evaluated, an internal pressure sensor monitoring the internal pressure is incorporated into an inner face of the rim, and signals on measured data of the internal pressure are transmitted by using a usually used telemeter and received by a receiver arranged in the interior of the vehicle to measure a change of the internal pressure. The measured results are also shown in Table 7.

Further, the rolling resistance is measured by an inertia method, in which a test is carried out under conditions that a tire internal pressure is 170 kPa, a load is a JIS 100% load and an inertia start temperature is 100 km and a work done corresponding to the rolling resistance of the tire is determined from a curve of lowering a speed of an inertial drum. The measured results are represented by an index on the basis that the tire of Comparative Example 10 is 100. The smaller the index value, the lower the rolling resistance. These results are also shown in Table 7.

Table 7-1

| | Comparative Example 10 | Comparative Example 11 | Example 24 | Example 25 | Example 26 | Example 27 |
|---|---|---|---|---|---|---|
| Kind of foamable resin composition | - | No. 1 | No. 1 | No. 2 | No. 3 | No. 4 |
| Volume of particles filled under an atmospheric pressure (liter) | - | 15.0 | 20.5 | 19.3 | 18.7 | 18.0 |
| Kind of innerliner rubber | A | A | A | A | A | A |
| Index of rolling resistance | 100 | 100 | 100 | 100 | 100 | 100 |
| Evaluation point of ride comfort against vibrations | 5.0 | 6.0 | 6.5+ | 6.5 | 6.0+ | 6.0 |
| State of running after the injuring of tire | | | | | | |
| Temperature inside tire in start of running (°C) | - | 27 | 27 | 28 | 28 | 27 |
| Pressure inside tire in start of running (kPa) | - | 0 | 0 | 0 | 0 | 0 |
| Maximum temperature inside tire during the running (°C) | - | 64 | 155 | 152 | 148 | 145 |
| Maximum pressure inside tire during the running (kPa) | - | 0 | 215 | 208 | 185 | 154 |

(continued)

|  | Comparative Example 10 | Comparative Example 11 | Example 24 | Example 25 | Example 26 | Example 27 |
|---|---|---|---|---|---|---|
| Development of internal pressure recovering function (presence/ absence) | - | absence | presence | presence | presence | presence |
| Available running distance (km) | 6 | 6 | 300 | 275 | 253 | 219 |

Table 7-2

|  | Example 28 | Example 29 | Example 30 | Example 31 | Example 32 | Example 33 |
|---|---|---|---|---|---|---|
| Kind of foamable resin composition | No. 5 | No. 1 | No. 2 | No. 3 - | No. 4 | No. 5 |
| Volume of particles filled under an atmospheric pressure (liter) | 17.7 | 15.9 | 21.8 | 22.1 | 22.3 | 22.4 |
| Kind of innerliner rubber | A | A | B | B | B | B |
| Index of rolling resistance | 100 | 100 | 100 | 100 | 100 | 104 |
| Evaluation point of ride comfort against vibrations | 6.0 | 6.0 | 6.5 | 6.5 | 6.5 | 6.5+ |
| State of running after the injuring of tire |  |  |  |  |  |  |
| Temperature inside tire in start of running (°C) | 27 | 27 | 28 | 27 | 28 | 27 |
| Pressure inside tire in start of running (kPa) | 0 | 0 | 0 | 0 | 0 | 0 |
| Maximum temperature inside tire during the running (°C) | 142 | 141 | 156 | 152 | 158 | 156 |
| Maximum pressure inside tire during the running (kPa) | 125 | 94 | 221 | 208 | 224 | 228 |
| Development of internal pressure recovering function (presence/absence) | presence | presence | presence | presence | presence | presence |
| Available running distance (km) | 171 | 83 | 300 | 300 | 300 | 300 |

Table 8

| No | Compound name of continuous phase | Manufacturer | Trade mark | Temperature of starting thermal expansion (°C) | Content of precipitation component having a specific gravity of not less than 0.79 (mass%) | Gas component included in cell |
|---|---|---|---|---|---|---|
| 1 | acrylonitrile polymer | - | trial product | 125 | 8 | propane |
| 2 | acrylonitrile/ methacrylonitrile copolymer | Matsumoto Yushi Seiyaku Co., Ltd. | F-77 | 108 | 5 | isobutane/ isooctane |
| 3 | acrylonitrile/ methacrylonitrile copolymer | Matsumoto Yushi Seiyaku Co., Ltd. | F-79 | 117 | 6 | isbutance/ isooctane/ isopentane |
| 4 | methyl methacrylate/ acrylonitrile copolymer | Aquzo-Novel Corp. | EXPANCEL 053 | 101 | 16 | isobutane |
| 5 | methyl methacrylate/ acrylonitrile/ methacrylonitrile terpolymer | Aquzo-Novel Corp. | EXPANCEL 091 | 128 | 15 | isopentane |

Table 9

| Internal pressure designated in vehicle : 200 kPa<br>Axel load of vehicle : 3.92 Kn<br>Tire size : 175/70R13, Rim size : 5J-13 | | | |
|---|---|---|---|
|  | Internal pressure in measurement of inner volume (kPa) | Load measured (kN) | Inner volume of tire-rim assembly (liter) |
| Initial inner volume $V_0$ | 0 | 0 | 21.3 |
| $V_2$ | 200 | 0 | 22.7 |
| $V_3$ (upper limit value -1) | 200 | 3.92 | 22.4 |
| $V_3$ (upper limit value -2) | 200 | 4.70 | 22.3 |
| $V_3$ (upper limit value -3) | 200 | 5.88 | 22.1 |
| $V_3$ (upper limit value -4) | 200 | 7.84 | 21.8 |
| $V_3$ (lower limit value -1) | 0 | 7.84 | 15,9 (corresponding to 90% of 17.7 liters) |
| $V_3$ (lower limit value -2) | 0 | 7.84 | 17.7 |
| $V_3$ (lower limit value -3) | 20 | 7.84 | 18.0 |
| $V_3$ (lower limit value -4) | 60 | 7.84 | 18.7 |
| $V_3$ (lower limit value -5) | 80 | 7.84 | 19.3 |

(continued)

| Internal pressure designated in vehicle : 200 kPa<br>Axel load of vehicle : 3.92 Kn<br>Tire size : 175/70R13, Rim size : 5J-13 | | | |
|---|---|---|---|
| | Internal pressure in measurement of inner volume (kPa) | Load measured (kN) | Inner volume of tire-rim assembly (liter) |
| $V_3$ (lower limit value -6) | 100 | 7.84 | 19.9 |

Examples 34-36, Comparative Example 12

There are prepared assemblies of passenger car tires having a tire size of 175/70R13 with a rim having a size of 5J×13 by applying particles having various specifications shown in Table 10 to a tire having a structure shown in FIG. 1 as shown in the same table. Here, the tire 1 is according to general structure of the interest tire kind and size. Moreover, a kind of the particle in Table 10 is shown in Table 11. The resin particles encapsulating a gas component therein as shown in Table 11 are heated and expanded to form particles, and the thus obtained particles or further a sealing sheet of a low density polyethylene of 2 cm × 2 cm × 60 μm are charged into the interior of the tire at various volumes shown in Table 10, and thereafter a tire internal pressure is adjusted to 350 kPa. Moreover, a sensor monitoring the internal pressure is incorporated into the rim, and signals on measured data of the internal pressure are transmitted by using a usually used telemeter and received by a receiver to measure a change of the internal pressure.

Then, the thus obtained passenger car tire-rim assembly is mounted onto a passenger car of 1500 cc class. Firstly, the ride comfort against vibrations under usual internal pressure is evaluated by a professional driver as a 10-point rating. In the evaluation result, the higher the point, the better the result.

Also, an iron plate welded at equal intervals with 10 nails each having a diameter of 3.0 mm and a length of 50 mm is fixed onto a road surface of a test circuit course, and once the car is passed on the iron plate at a speed of 90 km/h under a load capacity corresponding to four crewmen weight to ride front and rear wheels at a right side of the car on the nails to thereby create injuries in the tire, the steering property is evaluated by three-stage rating under a situation of dropping the internal pressure while measuring a lapse of time from the passing through the above iron plate and an internal pressure inside the tire. That is, the measurement is carried out by running at a speed of 90 km/h until the internal pressure drops to not less than 50 kPa before the injuring, and a time required for dropping 50 kPa is an evaluation measure.

On the other hand, a cut of 30 mm in length is artificially formed in a bead filler portion of the above passenger car tire, and such a cut is temporarily sealed and an internal pressure is filled in the tire. Then, the sealing is removed to evaluate whether or not the blow-off of the particles is stopped while measuring a time of dropping the internal pressure up to an atmospheric pressure.

The measured results are also shown in Table 10.

Table 10

| | Comparative Example 12 | Example 34 | Example 35 | Example 36 |
|---|---|---|---|---|
| Volume amount of particles used under an atmospheric pressure (liter) | - | 21 | 21 | 21 |
| Volume ratio of particles occupied (%) (*1) | - | 100.0 | 100 | 100 |
| Ratio of particles having a size of not less than 10 μm but less than 1 mm to total volume (%) | - | 80 | 100 | 80 |
| Ratio of particles having a size of not less than 1 mm but less than 5 mm to total volume (%) | - | 10 | 0 | 10 |
| Ratio of particles having a size of not less than 5 mm but less than 5 cm to total volume (%) | - | 10 | 0 | 10 |

(continued)

| | Comparative Example 12 | Example 34 | Example 35 | Example 36 |
|---|---|---|---|---|
| Number of sealing sheets (sheets) | - | - | 200 | 200 |
| Initial tire internal pressure (kPa)(*2) | 350 | 350 | 350 | 350 |
| Evaluation point of ride comfort against vibrations in running under usual internal pressure | 5.0 | 6.5 | 6.5 | 6.5 |
| Diameter of nail pushed into tire (mm) | 3.0 | 3.0 | 3.0 | 3.0 |
| Time from a point of riding over iron plate at a speed of 90 km/hr to a point of dropping internal pressure to 300 kPa (*3) | 7" | 31'40" | 51'13" | 50'07" |
| Sealing degree of injuries (number of sealed places among 10 places) | 0 | 10 | 10 | 10 |
| Steering stability just after insertion of nail (*4) | C | A | A | A |
| Time from a point of releasing sealed injuring to a point of dropping internal pressure to 100 kPa (*5) | 4" | 8'32" | 10'25" | 11'02" |
| Degree of sealing blow-out of particles (presence or absence of sealing) | absence | presence | presence | presence |
| (*1) Inner volume of tire : 21 liters, size : 175/70R13 rim : 5J-13<br>(*2) Internal pressure is adjusted by filling nitrogen into the tire after hollow particles are filled in the tire.<br>(*3) Time of not less than 1 minute is made successful.<br>(*4) Evaluation results<br>A : continuous steering is possible without trouble or steering is continued with care<br>B : carefulness and concentration are required in handle steering<br>C : deceleration running is required or running impossible (no control)<br>(*5) Time of not less than 30 seconds is made successful. | | | | |

Table 11

| Particle size (μm) | Manufacturer | Trade mark | Gas component in cell | Mean bulk specific gravity (g/cc) | Composition name of continuous phase |
|---|---|---|---|---|---|
| not less than 10 μm but less than 1 mm | Aquezo-Novel Corp. | EXPANCEL 053 | isobutane | 0.022 | methyl methacrylate/ acrylonitrile copolymer |
| not less than 1 mm but less than 5 mm | trial product | | isopentane | 0.046 | polystylene/ polyethylene copolymer |
| not less than 5 mm but less than 5 cm | trial product | | isopentane | 0.042 | polystylene/ polyethylene copolymer |

Examples 37-48

There are prepared assemblies of safety tires for passenger car having a tire size of 175/70R13 with a rim having a size of 5Jx13 and assemblies of safety tires for truck and bus having a tire size of 11R22.5 with a rim having a size of 50x22.5 by applying only cell-containing particles A having various specifications shown in Tables 12 and 13, and cell-containing particles A and particles B to a tire having a structure shown in FIG. 1 as shown in the same tables. Here, the tire 1 is according to general structure of the interest tire kind and size.

Moreover, a kind of the cell-containing particles A is shown in Table 14, and a kind of the particles B is shown in Table 15. That is, the resin particles encapsulating a gas component therein as shown in Table 3 are heated and expanded to form cell-containing particles A, and the thus obtained cell-containing particles A are charged into an interior of the tire at various true specific gravities as shown in Table 14. Also, the particles B shown in Table 15 are disposed inside the tire as they are.

With respect to the thus obtained tire-rim assemblies, various performances are evaluated by the following methods. The results on the tires for passenger car are also shown in Table 12, and the results on the tires for truck and bus are also shown in Table 13.

Moreover, a sensor monitoring the internal pressure is incorporated into an inner face of the rim in the tire-rim assembly for the above evaluation, and signals on measured data of the internal pressure are transmitted by using a usually used telemeter and received by a receiver arranged outside a drum testing apparatus to measure a change of the internal pressure.

<Evaluation of performances after the injuring of the tire (drum test)>

After an internal pressure is adjusted to 300 kPa as an absolute pressure by filling a nitrogen gas into the passenger car tire-rim assembly, 10 nails each having a diameter of 5.0 mm and a length of 50 mm are knocked from a tread surface so as to pass through the tire toward the interior thereof. At a state of knocking the nails, the tire is run on the drum at a speed of 90 km/h while applying a load of 3.54 kN, and a lapse of time from the start of the drum test and an internal pressure inside the tire are measured. The internal pressure is measured while continuously running at 90 km/h until the internal pressure drops by not less than 50 kPa from a test starting level of 300 kPa, and the test is stopped at a time of 250 kPa to conduct the comparison of running distances. Further, the number of remaining nails is counted after the stop of the drum at a time of 250 kPa, and traces after the falling-out of the nails are observed to evaluate the sealing degree and analyze a cause of dropping the internal pressure.

With respect to the assemblies of tires for truck and bus with the rim, the evaluation is carried out in the same manner as mentioned above except that the internal pressure is 800 kPa as an absolute pressure, and the nail has a diameter of 5 mm and a length of 8 cm, and the load is 26.46 kN, and the speed is 60 km/h and the internal pressure in the stop of the test is 500 kPa.

<Running distance on the drum after the internal pressure is rendered into an atmospheric pressure>

Next, the tire is left to stand statically until the internal pressure is completely escaped up to an atmospheric pressure. At such a state, the tire is run on the drum at a speed of 90 km/h over a distance of 300 km while applying a load of 3.54 kN in case of the tire for passenger car, during which a running distance of not less than 200 km is made successful, while in case of the tire for truck and bus, the running on the drum is continued under conditions that the load is 26.46 kN, and the speed is 60 km/h and the maximum distance is 100 km, during which a running distance of not less than 40 km is made successful.

Table 12

| Passenger car tire-rim assembly | | | | | | |
|---|---|---|---|---|---|---|
| | Example 37 | Example 38 | Example 39 | Example 40 | Example 41 | Example 42 |
| Kind of cell-containing particles A | 1A | 1A | 1A | 1A | 2A | 2A |
| Volume amount of cell-containing particles A used under an atmospheric pressure (liter) | 15.75 | 14.7 | 19.95 | 18.9 | 24.0 | 14.4 |
| Volume ratio of cell-containing particles A to inner volume of tire (%) (*1) | 75.0 | 70.0 | 95.0 | 90.0 | 100.0 | 60.0 |

(continued)

| Passenger car tire-rim assembly | | Example 37 | Example 38 | Example 39 | Example 40 | Example 41 | Example 42 |
|---|---|---|---|---|---|---|---|
| Kind of particles B | | - | 2B | - | 4B | - | 2B |
| Volume amount of particles B used under an atmospheric pressure (liter) | | - | 1.05 | - | 1.05 | - | 6.0 |
| Volume ratio of particles B to inner volume of tire (%)(*1) | | - | 5.0 | - | 5.0 | - | 25.0 |
| Evaluation results of performances after the injuring of tire (drum test) (*2) | Running distance up to dropping of internal pressure to 250 kPa (km) (*3) | 682 | 895 | 640 | 987 | 665 | 986 |
| | Number of remaining nails at a time of dropping internal pressure to 250 kPa (nails) | 5 | 5 | 5 | 4 | 4 | 4 |
| | Sealing property of trace after the falling-out of nails (*4) after the | complete | complete | complete | complete | complete | complete |
| Running distance on drum after internal pressure is rendered into an atmospheric pressure (km) | | 265 km | 300 km complete run | 300 km complete run | 300 km complete run | 300 km complete run | 300 km complete run |

(*1) Inner volume of tire: 21 liters, size : 175/70R13, rim : 5J-13 (*2) Internal pressure is adjusted by filling nitrogen gas into the tire after cell-containing particles A and particles B are disposed in the tire.

(*3) Internal pressure is monitored while running on drum at a state of knocking nails (*4) Sealing property of trace after the falling-out of nails.

"complete" : Since the traces after the falling-out of nails are completely clogged with the composition of the cell-containing particles A and the particles B, the dropping of the internal pressure is very slow before the stop of the drum and the further running is possible. "incomplete" : Since the traces after the falling-out of nails are not completely clogged, the internal pressure is gradually dropped and the dropping amount of the internal pressure is particularly large before the stop of the drum. Also, the sealing of the traces is incomplete, so that the further additional running can not be expected.

Table 13

| | | Example 43 | Example 44 | Example 45 | Example 46 | Example 47 | Example 48 |
|---|---|---|---|---|---|---|---|
| Tire for truck and bus-rim assembly | | | | | | | |
| Kind of cell-containing particles A | | 3A | 3A | 3A | 3A | 2A | 3A |
| Volume amount of cell-containing particles A used under an atmospheric pressure (liter) | | 90.00 | 84.00 | 108.00 | 102.00 | 96.0 | 96.0 |
| Volume ratio of cell-containing particles A to inner volume of tire (%) (*1) | | 75.0 | 70.0 | 90.0 | 85.0 | 80.0 | 80.0 |
| Kind of particles B | | - | 1B | - | 3B | - | 3B |
| Volume amount of particles B used under an atmospheric pressure (liter) | | - | 6.0 | - | 6.0 | - | 6.0 |
| Volume ratio of particles B to inner volume of tire (%) (*1) | | - | 5.0 | - | 5.0 | - | 5.0 |
| Evaluation results of performances after the injuring of tire (drum test) (*2) | Running distance up to dropping of internal pressure to 250 kPa (km) (*3) | 265 | 316 | 271 | 346 | 278 | 384 |
| | Number of remaining nails at a time of dropping internal pressure to 250 kPa (nails) | 4 | 3 | 3 | 3 | 3 | 3 |
| | Sealing property of trace after the falling-out of nails (*4) | complete | complete | complete | complete | complete | complete |

(continued)

| Tire for truck and bus-rim assembly | | | | | | |
|---|---|---|---|---|---|---|
| | Example 43 | Example 44 | Example 45 | Example 46 | Example 47 | Example 48 |
| Running distance on drum after internal pressure is rendered into an atmospheric pressure (km) | 43 km trouble | 56 km trouble | 51 km trouble | 68 km trouble | 48 km trouble | 63 km trouble |

(*1) Inner volume of tire : 120 liters, size: 11R22.5, rim : 750×22.5 (*2) Internal pressure is adjusted by filling nitrogen gas into the tire after cell-containing particles A and particles B are disposed in the tire.

(*3) Internal pressure is monitored while running on drum at a state of knocking nails (*4) Sealing property of trace after the falling-out of nails.

"complete" : Since the traces after the falling-out of nails are completely clogged with the composition of the cell-containing particles A and the particles B, the dropping of the internal pressure is very slow before the stop of the drum and the further running is possible. "incomplete" : Since the traces after the falling-out of nails are not completely clogged, the internal pressure is gradually dropped and the dropping amount of the internal pressure is particularly large before the stop of the drum. Also, the sealing of the traces is incomplete, so that the further additional running can not be expected.

Table 14

| Kind and content of cell-containing particles A | | | |
|---|---|---|---|
| | 1A | 2A | 3A |
| Trade mark | EXPANCEL 091 | EXPANCEL 551 | trial product |
| Manufacturer | Aquozo-Novel Corp. | Aquozo-Novel Corp. | - |
| True specific gravity (g/cc) | 0.025 | 0.046 | 0.02 |
| Distribution width of particle size ($\mu$m) | 20 - 220 | 20 - 180 | 40 - 280 |
| Material of particles | MMA/AN/MAN terpolymer | PVDC/AN copolymer | AN/MAN copolymer |
| Gas component included in cell | inpentane | isobutane | nitrogen |

MMA : methyl methacrylate
AN : acrylonitrile
MAN: methacrylonitrile
PVDC : vinylidene chloride

Table 15

| Kind and content of particles B | | | | | | |
|---|---|---|---|---|---|---|
| | Trade mark | Manufacturer | True specific gravity (g/cc) | Distribution width of particle size ($\mu$m) | Material of particles | Others |
| 1B | Filite FG(52/7) | Nippon Ferrite Co., Ltd. | 0.7 | 5 - 300 | Aluminosilicate | - |
| 2B | Scotchlite Glass Bubbles K1 | Sumitomo 3M Co., Ltd. | 0.125 | 20 - 120 | Silicate glass | - |
| 3B | Scotchlite Glass Bubbles K46 | Sumitomo 3M Co., Ltd. | 0.46 | 10 - 80 | Silicate glass | - |

(continued)

| Kind and content of particles B | | | | | | |
|---|---|---|---|---|---|---|
| | Trade mark | Manufacturer | True specific gravity (g/cc) | Distribution width of particle size ($\mu$m) | Material of particles | Others |
| 4B | trial product | - | 0.97 | 20 - 180 | MMA/AN | including liquid butyl rubber |
| MMA: Methyl methacrylate<br>AN : acrylonitrile | | | | | | |

Although the above experiments are carried out as a main purpose that compensation is effectively made for the internal pressure in the tire, if a small amount of the particles B is mixed in the cell-containing particles A, the effect of solving residual unbalance of the tire is obtained by utilizing a phenomenon that the particles B are unevenly distributed in the tire by an action through centrifugal force during the rotation of the tire.

Example 49

[Filling under an atmospheric pressure]

According to a pathway other than an arrow 18 shown in FIG. 5, a storage tank storing cell-containing particles having an average particle size of 120 $\mu$m under an atmospheric pressure, a tire-rim assembly and a diaphragm pump are connected through pressure hoses, and the cell-containing particles are filled in the interior of the tire-rim assembly at various filling amounts by a discharge pressure of the pump. Moreover, the tire-rim assembly is an assembly of a passenger car tire having a tire size of 185/70R14 with a rim having a size of 5.5J-14, and four inlet ports for the cell-containing particles and four outlet ports for extra air inside the tire are arranged on a bottom of the rim. Also, a glass filter is arranged in the outlet port for the extra air so as not to flow out the cell-containing particles from the tire.

[High pressure filling]

According to a pathway including an arrow 18 shown in FIG. 5, a storage tank storing cell-containing particles having an average particle size of 120 $\mu$m under a high pressure, a tire-rim assembly, a diaphragm pump and the storage tank are connected through pressure hoses to form an annular closed system. By circulating air in the system through the pump at a state of pressuring the interior of the system at 200, 250 and 300 kPa are transferred and filled the cell-containing particles from the storage tank to the interior of the tire-rim assembly at various filling amounts.

The results confirmed on the filling amount of the cell-containing particles filled in the tire-rim assembly at each of the above production steps are shown in Table 16. In this case, when a volume of the filled cell-containing particles under an atmospheric pressure is V 1 and an inner volume of the tire is V2, the filling amount is represented by filling amount P[%] = 100 $\times$ V1/V2.

Table 16

| | Filling under an atmospheric pressure | | | | Filling under a high pressure | | |
|---|---|---|---|---|---|---|---|
| Pressure inside filling system (kPa) | 100 | 100 | 100 | 100 | 200 | 250 | 300 |
| Filling amount of cell-containing particles (%) | 70 | 80 | 90 | 100 | 150 | 175 | 200 |

As seen from Table 16, the filling amount of not less than 100% can be attained in the high pressure filling because the cell-containing particles are compressed to decrease the volume.

Further, a static spring characteristic of the tire-rim assembly filled with the cell-containing particles is evaluated by using a longitudinal spring rigidity testing machine. In this case, a pneumatic tire having the same tire size as mentioned above is used as a control. The evaluation of the static spring of the tire is carried out by gradually evacuating only air from the interior of the tire after air of 300 kPa as a usual internal pressure is filled in the tire and measuring a spring characteristic at each internal pressure.

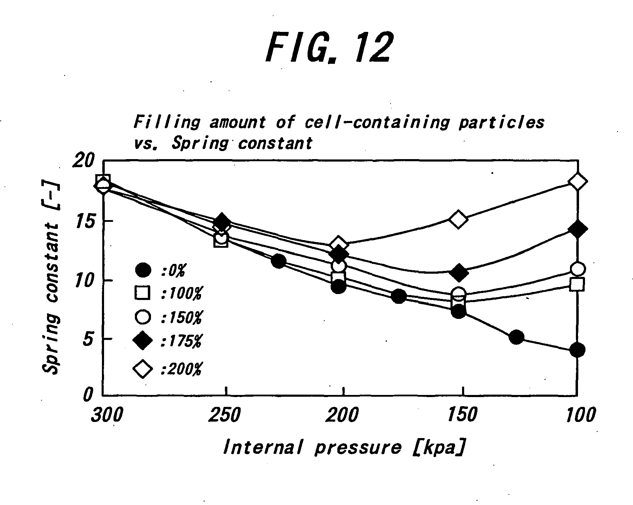

The evaluation results are shown in FIG. 12, from which it is understood that in the pneumatic tire as a conventional example, the lowering of spring constant is caused accompanied with the dropping of the internal pressure and basic performances as the tire are not obtained at the puncture. On the other hand, in the tire filled with the particles under a high pressure, the lowering of the spring constant is observed at an initial dropping of the internal pressure likewise the conventional example, but as the internal pressure further drops, the rise of the spring constant is inversely observed. This is due to the fact that the volume of the compressed cell-containing particles recovers accompanied with the dropping of the internal pressure to start the generation of tire casing tension. In the tire filled under the high pressure, therefore, it is understood that the spring constant equal to that in the usual use of the pneumatic tire is obtained even at the puncture.

Then, such a tire is mounted onto a passenger car of 2000 cc class and a nail having a diameter of 3 mm and a length of 3 cm is passed through the tire tread portion to form an external injury, and run on a test circuit course at 90 km/h under a load corresponding to four crewmen weight. This running is conducted over a maximum distance of 300 km to measure an available running distance. Moreover, a running distance of not less than 200 km is made successful as an evaluation standard. The results are shown in Table 17.

Table 17

| | Comparative Example | Filling under an atmospheric pressure | | | | Filling under a high pressure | | |
|---|---|---|---|---|---|---|---|---|
| Filling amount of cell-containing particles (%) | 0 | 70 | 80 | 90 | 100 | 150 | 175 | 200 |
| Available running distance after the injuring (km) | 1.8 | 54 | 76 | 98 | 109 | 300 | 300 | 300 |

As seen from Table 17, the available running distance after the injuring is largely increased by filling the cell-containing particles and further the effect is increased by filling under the high pressure.

INDUSTRIAL APPLICABILITY

According to the invention, there can be provided an assembly of a safety tire and a rim having an excellent durability which can stably run even at a tire injured state without sacrificing the rolling resistance and ride comfort in the usual running before the injuring of the tire.

**Claims**

1.    A method of adjusting pressure of closed cell-containing particles (3), wherein a great number of substantially sphere-shaped particles each containing a closed cell(s), which are obtained by expanding resin particles filled with a foaming agent under heating, are stored in a storage tank (20) adjusted with a pressure higher than the atmospheric pressure, so that the closed cell(s) of the particles are adjusted to a pressure higher than atmospheric pressure, the particles being stored in the storage tank before the particles are filled into an interior of a tire-rim assembly (21) for applying an internal pressure to the assembly.

2.    A method of adjusting pressure as claimed in claim 1, wherein the pressure of the storage tank is a given internal pressure of a tire.

3.    A method of adjusting pressure as claimed in claim 1 or 2, wherein the pressure of the storage tank is not less than 150 kPa.

4.    A method of filling closed cell-containing particles, wherein a great number of substantially sphere-shaped particles each containing a closed cell(s) and pressure-adjusted by a method claimed in any of claims 1 to 3 are transported and filled into the interior of a tire-rim assembly together with the gas inside the storage tank.

**Patentansprüche**

1.    Verfahren zur Druckeinstellung von Teilchen (3), die geschlossene Zellen enthalten, wobei eine große Anzahl von im Wesentlichen kugelförmigen Teilchen, die jeweils eine geschlossene Zelle (Zellen) enthalten, die durch Expandieren von mit einem Schaumbildner gefüllten Harzteilchen unter Erwärmung erhalten werden, in einem Lagerbehälter (20) gelagert wird, der mit einem Druck höher als der atmosphärische Druck reguliert wird, so dass die geschlossene Zelle (Zellen) der Teilchen auf einen Druck höher als der atmosphärische Druck eingestellt wird, wobei die Teilchen in dem Lagerbehälter gelagert werden, bevor die Teilchen in ein Inneres einer Reifen-Felgen-Anordnung (21) für das Anwenden eines Innendruckes bei der Anordnung gefüllt werden.

2. Verfahren zur Druckeinstellung nach Anspruch 1, bei dem der Druck des Lagerbehälters ein vorgegebener Innendruck eines Reifens ist.

3. Verfahren zur Druckeinstellung nach Anspruch 1 oder 2, bei dem der Druck des Lagerbehälters nicht kleiner ist als 150 kPa.

4. Verfahren zum Füllen von Teilchen, die geschlossene Zellen enthalten, bei dem eine große Anzahl der im Wesentlichen kugelförmigen Teilchen, die jeweils eine geschlossene Zelle (Zellen) enthalten und mittels eines Verfahrens nach einem der Ansprüche 1 bis 3 eine Druckeinstellung erfahren, in das Innere einer Reifen-Felgen-Anordnung zusammen mit dem Gas innerhalb des Lagerbehälters transportiert und gefüllt wird.

## Revendications

1. Procédé d'ajustement de la pression de particules contenant des alvéoles fermés (3), dans lequel un grand nombre de particules ayant pratiquement une forme sphérique, contenant chacune un (des) alvéole(s) fermé(s), produites par expansion de particules de résine remplies d'un agent moussant en présence d'un chauffage, sont stockées dans un réservoir de stockage (20), et ajustées à une pression supérieure à la pression atmosphérique, de sorte que l'alvéole (les alvéoles) fermé(s) des particules est (sont) ajusté(s) à une pression supérieure à la pression atmosphérique, les particules étant stockées dans le réservoir de stockage avant le remplissage des particules dans la partie interne d'un assemblage bandage pneumatique -jante (21), pour appliquer une pression interne à l'assemblage.

2. Procédé d'ajustement de la pression selon la revendication 1, dans lequel la pression du réservoir de stockage correspond à une pression interne définie d'un bandage pneumatique.

3. Procédé d'ajustement de la pression selon les revendications 1 ou 2, dans lequel la pression du réservoir de stockage n'est pas inférieure à 150 kPa.

4. Procédé de remplissage de particules contenant des alvéoles fermés, dans lequel un grand nombre de particules ayant une forme pratiquement sphérique, contenant chacune un (des) alvéole(s) fermé(s) et soumises à un ajustement de la pression par un procédé selon l'une quelconque des revendications 1 à 3, sont transportées et remplies dans la partie interne d'uri assemblage de bandage pneumatique-jante, ensemble avec le gaz contenu à l'intérieur du réservoir de stockage.

## FIG. 1

# FIG. 2

# FIG. 3

# FIG. 4

# FIG. 5

# FIG. 6

# FIG. 7

## FIG. 8

27a

27b

27

21a

## FIG. 9

30

31

2

1

21

32

# FIG. 10

20a

20b

21

33

# FIG. 11

# FIG. 12

Filling amount of cell-containing particles vs. Spring constant

Spring constant [-]

● : 0%
□ : 100%
○ : 150%
◆ : 175%
◇ : 200%

Internal pressure [kpa]

## REFERENCES CITED IN THE DESCRIPTION

**Patent documents cited in the description**

- JP 6127207 A
- JP 6183226 A
- JP 7186610 A
- JP 8332805 A
- JP 2987076 B
- JP 48047002 A
- US 4003419 A